# EUROPÄISCHE PATENTSCHRIFT

(11) **EP 4 638 102 B1**
(45) Veröffentlichungstag und Bekanntmachung des Hinweises auf die Patenterteilung: **03.06.2026**
(21) Anmeldenummer: 23833413.0
(22) Anmeldetag: 15.12.2023
(51) Int. Cl.: B29D 11/00

(54) **LINSE, INSBESONDERE OPHTHALMISCHE LINSE, SOWIE VERFAHREN UND VORRICHTUNG ZU DEREN HERSTELLUNG UND GIESSPAKET MIT DER LINSE**
LENS, IN PARTICULAR OPHTHALMIC LENS, METHOD AND DEVICE FOR PRODUCING SAME, AND CASTING PACKAGE COMPRISING THE LENS
LENTILLE, EN PARTICULIER LENTILLE OPHTALMIQUE, PROCÉDÉ ET DISPOSITIF DE PRODUCTION DE CELLE-CI, ET EMBALLAGE DE COULÉE COMPRENANT LA LENTILLE

(30) Priorität: 22.12.2022 DE 102022004865; 24.10.2023 DE 102023210501
(43) Veröffentlichungstag der Anmeldung: 29.10.2025
(73) Patentinhaber: Rodenstock GmbH, 80687 München (DE)
(72) Erfinder: RAUCH, Helmut, 94209 Regen (DE); ROHLFING, Yven, 81547 München (DE); WEIGAND, Udo, 81247 München (DE); ZINNER, Herbert, 85296 Rohrbach (DE); EBNER, Alexander, 94250 Achslach (DE); TRAULSEN, Christoph, 81379 München (DE)
(74) Vertreter: Wallinger Ricker Schlotter Tostmann
(86) Internationale Anmeldenummer: PCT/EP2023/086186
(87) Internationale Veröffentlichungsnummer: WO 2024/132979

(56) Entgegenhaltungen:
- WO-A1-2022/202182
- JP-A- H02 169 208
- US-A1- 2008 029 914
- US-A1- 2008 110 245
- US-A1- 2016 325 512
- US-A1- 2021 308 922
- US-A1- 2022 219 361
- US-B1- 6 416 689
- US-B2- 6 843 940

## Beschreibung

Die vorliegende Erfindung betrifft ein Verfahren und eine Vorrichtung zur Herstellung einer Linse, insbesondere einer ophthalmischen Linse, durch Befüllen eines Gießpaketes, insbesondere eines Gießpaketes mit geringem Spaltmaß und/oder mit einem Gießharz zum Ausbilden einer photochromen Beschichtung, sowie das Gießpaket und eine, vorzugsweise ophthalmische und/oder zumindest eine photochrome Beschichtung aufweisende, Linse.

Linsen, insbesondere ophthalmische Linsen, bevorzugt Brillengläser, können auf unterschiedliche Arten hergestellt werden. Ein bekanntes Herstellungsverfahren ist ein Abgussverfahren, bei dem eine vorderer und eine hintere Formschale, auch als Gießform bezeichnet, Anwendung finden. Eine solche Formschale ist eine Negativform bzw. Negativmaske der später zu erhaltenden Form der Linse, d. h. für eine konvexe bzw. konkave Fläche einer abzugießenden Linse wird eine Formschale benötigt, welche eine gegensätzliche Form aufweist, also eine konkaven bzw. konvexen Form besitzt. Selbstverständlich ist eine Vielzahl anderer Formen ebenfalls denkbar und werden auch eingesetzt, um angepasste Linsen herzustellen. Bei einem solchen Abgussverfahren werden eine vordere und eine hintere Formschale in einem definierten Abstand zueinander positioniert und anschließend wird ein, nach Aushärtung die spätere Linse bildendes, Gießharz in den entstandenen, durch die vorderen und hinteren Formschale vorgegebenen Hohlraum, gegossen. Anschließend erfolgt die Aushärtung je nach Zusammensetzung der das Gießharz bildenden Bestandteile entweder thermisch, d.h. durch Temperieren bei einer die Aushärtung des Gießharzes begünstigenden Temperatur, oder photochemisch, d. h. durch Hervorrufen einer chemischen Reaktion durch Bestrahlung mit elektromagnetischer Strahlung geeigneter Wellenlänge, worunter insbesondere ein Prozess verstanden wird, bei dem das Gießharz durch Bestrahlung mit UV-Strahlung aushärtet. Die verwendeten Gießharze sind dabei nicht stark eingeschränkt und müssen nur dem Umstand genügen, dass sie von hinreichender optischer Güte im Hinblick auf optischen Abbildungseigenschaften der späteren Linse sind. Zusätzlich können die Gießharze noch weitere Bestandteile enthalten, die der späteren Linse gewünschte, bevorzugte Eigenschaften verleihen, wie beispielsweise einen angepassten Brechungsindex bzw. gewünschte Absorptionseigenschaften, wie insbesondere einen Schutz vor schädlicher UV-Strahlung. Nach erfolgter Aushärtung werden die vordere und hintere Formschale entfernt, wodurch man die Linse erhält. Anschließend können noch weitere Bearbeitungs- bzw. Veredelungsschritte folgen, wie beispielsweise das Einarbeiten einer definierten optischen Wirkung bzw., im Falle einer ophthalmischen Linse, einer augenoptischen Verschreibung zur Korrektur einer ermittelten Fehlsichtigkeit mittels geeigneter Bearbeitungs-, insbesondere Fräs- und Schleifverfahren, sowie das Aufbringen diverser Beschichtungen zum Erhalt einer bruchfesten, kratzschutzoptimierten, ggf. photochromen, reflexmindernden bzw. reflektierenden und/oder schmutzabweisenden Linse. Insbesondere im Fall, wenn die so erhaltene Linse noch weitere Bearbeitungsschritte erfährt, stellt eine derart hergestellte Linse aus Sichtweise des gänzlichen Herstellungsprozesses ein Zwischenerzeugnis dar, weshalb der vorliegende Gegenstand auch als Halbfertigteil bzw. Halbfertigerzeugnis, Linsen-Halbfertigteil bzw. Linsen-Halbfertigerzeugnis, bzw. sinngemäß Brillenglas-Halbfertigteil bzw. Brillenglas-Halbfertigerzeugnis bezeichnet wird.

Selbsttönende bzw. photochrome Linsen können auf UV-Strahlung reagieren. Je nach Intensität der auf das Brillenglas auftreffenden UV- Strahlung tönt sich dieses dunkel oder hell. Das Eindunkeln bzw. Aufhellen der Linse wird durch eine Funktionsfärbung ermöglicht, mit welcher die Linse versehen ist. Die Funktionsfärbung wird hierbei durch einen photochromen Farbstoff hervorgerufen, welcher mit einer reversiblen Änderung seiner molekularen Struktur reagiert, auch als Isomerisierung bezeichnet, und damit auch sein Absorptionsverhalten als Reaktion auf die Bestrahlung mit UV-Strahlung ändert. Lässt die Bestrahlung mit UV-Strahlung nach, nimmt der photochrome Farbstoff wieder seine ursprüngliche molekulare Struktur und damit auch sein ursprüngliches Absorptionsverhalten an. Ein photochromer Farbstoff ermöglicht somit ein reversibles Hin- und Herschalten zwischen einer dunklen und einer hellen Tönung. Eine solche Funktionsfärbung kann auf verschiedene Arten erreicht werden. Eine Art ist die auch als Massefärbung bezeichnete Herstellungsart mit dem eingangs erwähnten Abgußverfahren unter direkter Beimengung des Farbstoffes zum Gießharz. Ebenfalls kann die Funktionsfärbung auf eine Linse aufgebracht werden, indem die Linse mit einer dünnen Schicht beschichtet oder mit einer Lage versehen wird, welche einen photochromen Farbstoff aufweist.

Aus dem Stand der Technik sind dem Fachmann eine Vielzahl von Möglichkeiten bekannt, um zusätzliche, dünne Schichten, wie beispielsweise photochrome Beschichtungen, auf eine Linse aufzubringen bzw. auf dieser auszubilden, worunter insbesondere Spin Coating und Tauchlackierung zu nennen sind.

Im Falle einer Tauchlackierung wird die zu beschichtende Linse in ein Tauchbad eingetaucht, enthaltend mindestens einen photochromen Farbstoff, was zum Erhalt einer photochromen Beschichtung auf beiden Seiten der Linse führt. Eine solche Tauchlackierung ist apparativ nicht sehr aufwendig und kann in herkömmlichen Tauchbeschichtungsanlagen realisiert werden, hat aber zum Nachteil, dass eine für ophthalmische Linsen notwendige Kosmetik schwer zu erreichen ist und/oder dass aufgrund der beidseitigen Beschichtung ein hoher Materialverbrauch vorliegt, was insbesondere bei den komplexen photochromen Farbstoffen einen wirtschaftlichen Nachteil durch die dadurch gestiegenen Herstellkosten darstellt.

Obgleich beim Spin Coating nur auf einer der beiden Seiten der Linse die gewünschte photochrome Beschichtung aufgetragen wird und somit der Materialbedarf entsprechend geringer ist, weist dieses Verfahren u.a. den Nachteil auf, dass beim Spin Coating mit einer Losgröße von einem Stück produziert wird, was in der Handhabung zeitaufwendig und wenig Raum für kostensenkende Automatisierungsmaßnahmen lässt.

Insbesondere das Herstellen einer photochromen Linse, insbesondere einer photochromen, ophthalmischen Linse, lässt sich mit einem eingangs erwähnten Abgussverfahren, unter Beimengung photochromer Farbstoffe in ein Gießharz, nicht bzw. nicht ohne Nachteile realisieren. Ein Grund hierfür ist, dass in Gießharzen für ophthalmische Linsen zumeist UV-Absorber beigemengt sind, um der so hergestellten ophthalmische Linse einen Schutz vor schädlicher UV-Strahlung zu verleihen. UV-Absorber stehen prinzipiell in Konkurrenz mit einem photochromen Farbstoff, da beide auf einfallende UV-Strahlung reagieren. Ein weiterer Grund ist die Vernetzung des Gießharzes beim Aushärten, welche das Isomerisierungsverhalten der photochromen Farbstoffe negativ beeinflusst bzw. derart einschränkt, dass eine photochrome Reaktion nur noch stark beeinträchtigt stattfinden kann oder gänzlich ausbleibt. Neben den technischen Gründen sind auch noch wirtschaftliche Gründe anzuführen. Das bei einem solchen Abgussverfahren zwischen den beiden Formschalen befindliche, die spätere Linse bildende, Volumen weist in der Regel eine mittlere Dicke im Bereich mehrere Millimeter auf, um der späteren Linse ein Mindestmaß an Bruchfestigkeit zu verleihen. Die Beimengung komplexer, höchst spezifischer photochromer Farbstoffe in ein Gießharz würde eine große Menge an photochromen Farbstoffen erfordern, wodurch die Herstellungskosten eines solchen photochromen Brillenglases erheblich steigen würden. Noch größer ist die Menge an Farbstoff, der im Zuge der Oberflächenbearbeitung des oben erwähnten Halbfertigteiles abgetragen und verworfen wird.

Entsprechend kann es zur Fertigung von Linsen mit wenigstens einer, insbesondere nicht-linearen, optischen Funktionalität, von Vorteil sein, diese Funktionalität als (Be)Schicht(ung) bzw. Überfang von einem Linsen-Grundkörper, beispielsweise einem vorstehend genannten Linsen- bzw. Brillenglas-Halbfertigteil, zu trennen. Dies gilt insbesondere für das Ausrüsten einer ophthalmischen und/oder Kunststofflinse, insbesondere eines Brillenglases, mit wenigstens einer photochromen Beschichtung bzw. Lage, welche vorzugsweise zumindest einen photochromen organischen Farbstoff aufweist. Daher wird die vorliegende Erfindung nachfolgend teilweise anhand dieser besonders bevorzugten Anwendung einer Linse, insbesondere eines Brillenglases, mit zumindest einer, vorzugsweise dünnen, photochromen Beschichtung erläutert, ohne jedoch hierauf beschränkt zu sein.

Eine aus der US 2022/219361 A1 bekannte Spritzgussvorrichtung umfasst ein im Wesentlichen kreisförmiges erstes Substrat, ein im Wesentlichen kreisförmiges zweites Substrat, das so angeordnet ist, dass es einer Oberfläche des ersten Substrats zugewandt ist, ein Befestigungselement, das einen peripheren Endabschnitt des ersten Substrats und einen peripheren Endabschnitt des zweiten Substrats fixiert, und einen Einspritzabschnitt, der in dem Befestigungselement vorgesehen ist und aus dem eine Zusammensetzung in einen Spalt zwischen dem ersten Substrat und dem zweiten Substrat eingespritzt wird, wobei ein Raum, der den Einspritzabschnitt und den Spalt verbindet, in zumindest einem Teil eines Umfangs des Spalts vorgesehen ist und eine Breite des Raums in einer Dickenrichtung größer ist als eine Breite des Spalts in der Dickenrichtung.

Es besteht die Aufgabe, ein verbessertes Verfahren zur Herstellung einer Linse bereitzustellen, insbesondere ein Verfahren, was die zuvor diskutierten Nachteile im Hinblick auf die Herstellung einer Linse mit einer dünnen Schicht, worunter besonders bevorzugt eine photochrome Beschichtung verstanden wird, adressiert.

Diese Aufgabe wird durch ein Verfahren gemäß Anspruch 1 gelöst.

Eine Aufgabe kann auch in der Bereitstellung einer Vorrichtung zur Durchführung eines hier beschriebenen Verfahrens oder der Bereitstellung einer vorteilhaften, vorzugsweise ophthalmischen und/oder nach einem hier beschriebenen Verfahren hergestellten, Linse bestehen.

Diese Aufgabe wird durch eine Vorrichtung gemäß Anspruch 13, die zur Durchführung eines hier beschriebenen Verfahrens eingerichtet ist bzw. verwendet wird, bzw. eine nach einem hier beschriebenen Verfahren hergestellte Linse gelöst. Entsprechend gelten die vorliegenden Erläuterungen und/oder Merkmale gleichermaßen für ein erfindungsgemäßes Verfahren, eine erfindungsgemäße Vorrichtung, und eine nach einem erfindungsgemäßen Verfahren hergestellte Linse, auch wenn sie nur mit Bezug zu einem dieser Aspekte genannt sind. Insbesondere wird auch die Verwendung eines hier beschriebenen Gießpakets in einem hier beschriebenen Verfahren bzw. die Verwendung einer hier beschriebenen Vorrichtung zur Durchführung eines hier beschriebenen Verfahrens unter Schutz gestellt. Die Unteransprüche betreffen vorteilhafte Weiterbildungen.

Ein Aspekt der Erfindung betrifft ein Verfahren zur Herstellung einer Linse, insbesondere eines Brillenglases, umfassend zumindest einen der folgenden Schritte:

| | |
|---|---|
| S100: | Bereitstellen eines Grundkörpers, |
| S102: | Bereitstellen einer Formschale, |
| S104: | Anordnen von Grund- bzw. Glaskörper und Formschale derart, dass zwischen Grund- bzw. Glaskörper und Formschale ein Hohlraum ausgebildet ist, |
| S106: | Anbringen eines Dichtungsbandes erzeugend eine Abdichtung des zwischen Grund- bzw. Glaskörper und Formschale gebildeten Hohlraums zum Erhalt eines Gießpaketes, |
| S108: | Ausbilden mindestens einer Öffnung in dem Dichtungsband, |
| S110: | Anordnen des Gießpakets in einer Halteeinrichtung, |
| S112: | Befüllen des Hohlraums durch die mindestens eine Öffnung mit einem Gießharz, |
| S114: | Verschließen der Öffnung, |
| S116: | Entnehmen des mit einem Gießharz befüllten Gießpaketes aus der Halteeinrichtung, |
| S118: | Aushärten des Gießpaketes, |
| S120: | Entfernen des Dichtungsbandes, und |
| S122: | Entfernen der Formschale zum Erhalt einer Linse. |

Das erfindungsgemäße Verfahren ermöglicht die Herstellung einer Linse mittels eines Angussverfahrens. Vorzugsweise umfasst es wenigstens die Schritte S100, S102, wobei die Formschale vor, nach oder mit dem Grundkörper bereitgestellt werden kann, die Schritte S104, S106, S112, S120 und S122, vorzugsweise in dieser Reihenfolge, wobei in einer vorteilhaften Weiterbildung einer oder mehrerer der Schritte S108, S110 und S116, S114 und S118 vorgesehen sind, vorzugsweise in der durch die (aufsteigende) Nummerierung des jeweiligen Schritts angegebenen Reihenfolge mit Bezug zueinander und/oder die vorgenannten Schritte S100, S102, S104, S106, S112, S120 und S122, ohne dass die Erfindung hierauf beschränkt ist.

Vorteilhafterweise kann die Oberfläche der, in einer Ausführung durch das (Aushärten des) Gießharz(es), aufgebrachten Beschichtung ausgeformt werden und in einem bevorzugten Fall, d. h. im Fall einer möglichst homogenen Beschichtung, worunter eine gleichförmige Beschichtung und eine hinsichtlich ihrer Schichtdicke nahezu ortsunabhängige, konstante Beschichtung verstanden wird, ist die Oberfläche der Beschichtung nahezu identisch zur Oberfläche der unbeschichteten Linse. Bevorzugt kann eine Modifikation der Oberfläche, worunter insbesondere eine Strukturierung mit beispielsweise gezielten Erhebungen verstanden werden kann, mittels dieses Verfahrens erreicht werden.

Vorteilhafterweise kann mit diesem Verfahren eine Beschichtung bzw. ein Anguss bzw. ein Überfang auf einem Grundkörper hergestellt werden, welcher ein geringes Spaltmaß von bevorzugt kleiner als 1.000 µm, besonders bevorzugt von wenigen hundert Mikrometern, bevorzugt von kleiner als 500 µm aufweist. In einer Ausführung ist ein, in einer Ausführung maximales oder über den Verlauf gemitteltes, Spaltmaß des Hohlraums kleiner als eintausend Mikrometer (1.000 µm), besonders bevorzugt kleiner als 500 µm. In einer Ausführung bildet das Gießharz eine photochrome Beschichtung, es kann (hierzu) insbesondere zumindest einen photochromen, besonders bevorzugt, organischen Farbstoff aufweisen. Für solche dünnen und/oder photochromen Beschichtungen ist die vorliegende Erfindung, insbesondere aufgrund der Anforderungen in Fertigung und/oder hinsichtlich der Qualität und/oder Materialien, ganz besonders vorteilhaft, jedoch nicht hierauf beschränkt. Die durch das Gießharz ausgebildete Beschichtung kann statt der photochromen wenigstens eine andere optische Funktionalität oder außer der photochromen wenigstens eine andere optische Funktionalität aufweisen bzw. realisieren. In einer bevorzugten Ausführung wird die Formschale bzw. Gießform auf einer objektseitigen bzw. umweltseitigen bzw. nicht-augenseitigen Vorderseite des Grundkörpers angeordnet, so dass die durch das Gießharz ausgebildete Beschichtung entsprechend auf einer objekt- bzw. umwelt- bzw. nicht-augenseitigen Vorderseite der Linse ausgebildet bzw. angeordnet ist, was funktional besonders vorteilhaft sein kann.

In einem Verfahrensschritt S100 wird dabei ein Grundkörper bereitgestellt, worunter ein beliebiges Substrat bzw. Trägermaterial verstanden werden kann, auf dem das mittels dieses Verfahrens das Angießen eines Gießharzes erfolgt, was nach entsprechender Aushärtung zum Erhalt eines Angusses bzw. einer Schicht bzw. eines Überfangs bzw. einer zusätzlichen Komponente bzw. einer zusätzlichen Lage auf dem Grundkörper führt. Um in seiner späteren Verwendung als Linse tauglich zu sein, sollte der Grundkörper eine hinreichende optische Güte im Hinblick auf optische Abbildungseigenschaften besitzen. Der Fachmann versteht unter optischen Abbildungseigenschaften eine Vielzahl bestimmbarer, charakteristischer Größen, welche einen vorliegenden Gegenstand, wie insbesondere einen Grundkörper, hinsichtlich seiner optischen Abbildungseigenschaften charakterisieren können, worunter Eigenschaften wie beispielsweise die spektrale Transmission, Farbwiedergabe bzw. die Abbe-Zahl zählen. Insbesondere in der Verwendung von Kunststoffen als Materialien zur Herstellung von Linsen, insbesondere von ophthalmischen Linsen bzw. Brillengläsern, haben sich in den letzten Jahren Materialien wie Poly(thio)urethan, Polyacrylat, Polymethylmethacrylat, Polycarbonat, Polydiethylenglycolbisallylcarbonat oder Kombinationen hiervon als bevorzugt herausgestellt, wobei prinzipiell auch andere transparente Kunststoffmaterialien verwendet werden können. Entsprechend weist der Grundkörper in einer Ausführung Kunststoff auf, kann insbesondere ein Kunststoffgrundkörper, vorzugsweise ein Kunststoffgrundglas, sein. In einer bevorzugten Ausführungsform ist der Grundkörper mit einem eingangs erwähnten Abgussverfahren hergestellt worden und weist zumindest eine erste optische Wirkung auf und kann daher auch als Halbfertigteil bezeichnet werden, da zumindest die erste oder die zweite Seite bzw. Fläche bzw. beide Seiten bzw. Flächen des Grundkörpers bereits eine gewünschte geometrische Form, worunter insbesondere ein definierter Krümmungsradius verstanden wird, ausgebildet ist. Ein solcher Grundkörper kann auch eine fertig prozessierte Linse sein, welche im Rahmen des Verfahrens mit einer zusätzlichen Schicht bzw. einem zusätzlichen Überfang versehen wird.

In einer Ausführung weist der Grundkörper (auf dem der spätere Anguss ausgeführt wird) Kunststoffmaterial, vorzugsweise entsprechender optischer, Güte auf, welches aus polymerisierbaren Molekülen, vorzugsweise optischer Qualität, aufgebaut ist, in einer Weiterbildung besteht der Grundkörper aus solchem Kunststoffmaterial. Diese polymerisierbaren Verbindungen können insbesondere Monomere, Oligomere und/oder Vorpolymere sein. Es werden bevorzugt Einzelne oder Mehrere oder Kombinationen der Folgenden zur Bereitstellung bzw. als thermisch härtbare(r) Polyurethan- und Polythiourethan-Gießharze, insbesondere zur Herstellung des Grundkörpers, verwendet: multifunktionale Isocyanate, Isothiocyanate und/oder Episulfide, multifunktionale Alkohole und/oder Thiole. Ebenfalls bevorzugt werden Einzelne oder Mehrere oder Kombinationen der Folgenden zur Bereitstellung bzw. als thermisch und/oder photochemisch härtbare(r) Polyacrylat- und Polymethylmethacrylat-Gießharze, insbesondere zur Herstellung des Grundkörpers, verwendet: multi- und/oder monofunktionale Acrylate und/oder Methylmethacrylate. Ebenfalls bevorzugt werden Einzelne oder Mehrere oder Kombinationen der Folgenden zur Bereitstellung bzw. als thermisch härtbare(r) Polycarbonat- und Polydiethylenglycol-bis(allylcarbonat)-Gießharze, insbesondere zur Herstellung des Grundkörpers, verwendet: multi- und/oder monofunktionale Allylcarbonate und/oder Diethylenglycol-bis(allylcarbonate).

Derartige Zusammensetzungen bzw. Kunststoffmaterialien werden unter, markenrechtlich geschützten, Handelsnamen wie beispielsweise CR-39, CR-607, CR-630, oder auch MR-7, MR-8 und MR-10 angeboten. CR-39 oder Columbia Resin 39 wird von der Firma Pittsburgh Plate Glass Industries (PPG Industries) vertrieben, wobei es sich hierbei um einen duroplastischen Polymerwerkstoff handelt. CR-607 und CR-630 stammen ebenfalls von PPG Industries. Bei den Handelsbezeichnungen MR-7, MR-8 und MR-10 handelt es ich um Polythiourethane, die von der Firma Mitsui Chemicals vertrieben werden. Die Abkürzung "MR" steht dabei für Mitsui Resin.

Zusätzlich oder alternativ zu diesen bevorzugten Materialien können nicht eingeschränkt insbesondere auch andere transparente Kunststoffmaterialien verwendet werden.

In einem weiteren Verfahrensschritt S102, der wie bereits erwähnt vor, mit oder nach Verfahrensschritt S100 durchgeführt werden kann, wird eine Formschale bereitgestellt, worunter ein Gegenstand verstanden wird, der zumindest eine Fläche aufweist, die der gegenteiligen Form der nach Durchführung des Verfahrens zu erhaltenden, gewünschten Linsenfläche entspricht. Diese Fläche der Formschale stellt das Negativabbild der zu erhaltenden Linsenoberfläche dar. Im einfachsten Fall weist die Formschale daher eine gekrümmte Oberfläche auf, welche je nach gewünschter Fläche der zu erhaltenden Linse konkav bzw. konvex ist, wenn die zu erhaltende Linsenoberfläche entsprechend konvex bzw. konkav erhalten werden soll. Selbstverständlich sind auch Kombinationen davon denkbar, sowie insbesondere beliebige Formen. Vorteilhafterweise können in der Formschale auch Strukturen vorhanden sein, und so wäre es auch denkbar, die Formschale mit Auslassungen zu versehen die nach dem Anguss auf der Linse entsprechende Erhebungen hinterlassen, welche zur Ausprägung von Mikrolinsen führen können. Bevorzugt kann durch Verwendung einer derart angepassten Formschale eine Vielzahl von Mikrolinsen auf der späteren Linse ausgeprägt werden, was insbesondere bei der Verwendung einer solchen Linse als ophthalmische Linse in einem Brillenglas, insbesondere zur Behandlung von Myopie, vorteilhaft sein kann.

In einem weiteren Verfahrensschritt S104 werden der zuvor bereitgestellte Grundkörper und die bereitgestellte Formschale angeordnet. Hierunter wird bevorzugt verstanden, dass Grundkörper und Formschale derart zueinander angeordnet bzw. positioniert werden, dass Grundkörper und Formschale in einem definierten Abstand zueinander sind und sich hierdurch ein Hohlraum zwischen Grundkörper und Formschale ausbildet. Bevorzugt sind Grundkörper und Formschale derart zueinander angeordnet, dass sich dazwischen ein Hohlraum ausbildet mit einem geringen Spaltmaß, worunter bevorzugt ein Spaltmaß, insbesondere ein maximales oder über den Verlauf gemitteltes Spaltmaß von kleiner oder gleich 1.000 µm, bevorzugt kleiner oder gleich 500 µm, verstanden wird.

Ein weiterer Verfahrensschritt S106 umfasst das Anbringen eines Dichtungsbandes, auch Tape genannt, dergestalt, dass eine, vorzugsweise gas- und/oder flüssigkeitsundurchlässige, Abdichtung, in einer Ausführung eine luftdichte und/oder bezüglich des flüssigen Gießharzes (flüssigkeits)undurchlässige Abdichtung, des ausgebildeten Hohlraums zwischen Grundkörper und Formschale stattfindet. Die Wahl eines geeigneten Dichtungsbandes ist dabei nicht stark eingeschränkt. Im Prinzip ist jedes geeignete Klebeband denkbar, solange es die geforderte Abdichtung sicherstellt, an Grundkörper und Formschalte anhaftet und gleichzeitig auch in einem späteren Verfahrensschritt wieder gelöst und entfernt werden kann. Vorzugsweise weist das Dichtungsband eine hohe chemische Beständigkeit gegenüber dem verwendeten Gießharz auf und ist vorteilhafterweise druckbeständig, da das Verfahren in einer Ausführung das spätere Befüllen des Hohlraums insbesondere mit Gießharzen hoher Viskosität ermöglichen soll. Zudem kann die Befülldauer verkürzt werden, wenn die Befüllung unter höheren Drücken stattfindet. Das Anbringen des Dichtungsbandes kann wahlweise manuell erfolgen oder durch eine geeignete Vorrichtung, welches das zur Abdichtung verwendete Dichtungsband in einem Reservoir, bevorzugt auf einer Rolle aufweist, und dann durch einen Abroll- bzw. Abwickelvorgang mindestens eine Lage des Dichtungsbandes um das Gebilde aus Formschale und Grundkörper rollt bzw. wickelt, mit dem Ziel, die geforderte (gas- und flüssigkeitsundurchlässige) Abdichtung zu erhalten. In einer Ausführung weist das Dichtungsband ein Trägermaterial, vorzugsweise aus PET, OPP oder dergleichen, und/oder einen Klebstoff, vorzugsweise einen Acrylkleber, Silikonkleber oder dergleichen, auf. Diese sind aufgrund der Anforderungen durch das Befüllen mit Gießharz, in einer bevorzugten Ausführung unter Überdruck, besonders geeignet.

Ein derart erhaltener Gegenstand, bestehend aus Grundkörper, aus einer, in einem definierten Abstand hierzu angeordneten, Formschale, ausbildend einen Hohlraum, und umschlossen mit einem Dichtungsband, wird auch als Gießpaket bezeichnet.

Ein weiterer Verfahrensschritt S108 kann das Ausbilden mindestens einer ersten Öffnung in dem Dichtungsband umfassen, um über besagte Öffnung zu einem späteren Zeitpunkt ein Gießharz in den Hohlraum einfüllen zu können ("Einlassöffnung" bzw. "Einfüllöffnung"). Eine solche erste Öffnung kann ausgebildet werden und wahlweise durch eine Vorrichtung erfolgen, welche geeignet ist, einen mechanischen Vorgang zum Ausbilden einer ersten Öffnung, wie beispielsweise Schneiden, Stechen bzw. Stanzen, oder einen thermischen Vorgang zum Ausbilden einer ersten Öffnung, wie beispielsweise eine gezielte thermische Erwärmung bzw. Zersetzung mit einem heißen Gegenstand bzw. mit einem Gegenstand aufweisend eine heiße Oberfläche, welche in Kontakt mit dem Dichtungsband an der gewünschten Stelle zur Ausbildung einer ersten Öffnung gebracht wird, oder mittels eines fokussierten Laserpulses, welcher an der gewünschten Stelle zur Ausbildung einer ersten Öffnung eine gezielte thermische Zersetzung herbeiführt, durchzuführen.

Zusätzlich zu einer ersten Öffnung als Einlassöffnung kann auch noch zumindest eine weitere, zweite Öffnung ausgebildet werden, welche der, beim späteren Befüllen des Hohlraums verdrängten, Luft zum Entweichen dient ("Auslassöffnung"). Bevorzugt ist eine solche zweite Öffnung gegenüberliegend zur ersten Öffnung angebracht. Alternativ kann auf das Ausbilden einer zweiten Öffnung als Auslassöffnung verzichtet werden, wenn der Hohlraum vor dem Befüllen evakuiert wird. Bevorzugt findet ein solches Evakuieren nach Ausbilden einer ersten Öffnung statt, besonders bevorzugt weist die zur Ausbildung der Öffnung und/oder (die) zum Befüllen mit Gießharz verwendete Vorrichtung, gegebenenfalls neben ihrer mechanischen bzw. thermischen Komponente zur Ausbildung der Öffnung, eine entsprechende Eigenschaft zum Evakuieren auf. Zusätzlich kann auch eine Mehrzahl an Öffnungen ausgebildet werden, um so beispielsweise die Befüllung nicht nur von einer Position, sondern von mehreren Positionen gleichzeitig zu ermöglichen. Alternativ kann das verwendete Dichtungsband auch bereits mit einer bzw. mehreren Öffnungen versehen sein, so dass Schritt S108 im erfindungsgemäßen Verfahren entfallen bzw. nicht Teil eines erfindungsgemäßen Verfahrens sein bzw. vor Anbringen des Dichtungsbandes, vorzugsweise von einem Dritten wie einem Lieferanten des Dichtungsbandes oder dergleichen durchgeführt werden kann. In einer Ausführung weist das Dichtungsband eine oder mehrere Öffnungen, insbesondere die bzw. eine oder mehrere (der) Einlassöffnung(en) und/oder die bzw. eine oder mehrere (der) Auslassöffnung(en) auf, die vor dem Anbringen des Dichtungsbandes ausgebildet ist bzw. sind, in einer Ausführung, in der das Verfahren Schritt S108 umfasst, ausgebildet wird bzw. werden. Das Ausbilden einer Öffnung bzw. mehrerer solchen Öffnungen erfolgt an einer definierten Stelle, bevorzugt derart, dass eine solche Öffnung eine definierte Größe aufweist und beim Erzeugen der Öffnung weder der Grundkörper noch die Formschale verletzt werden. Die auszubildende Öffnung bzw. die auszubildenden Öffnungen sind hinsichtlich ihrer Größe bzw. ihres Durchmessers definiert. Der Durchmesser wird dabei so gewählt, dass einerseits ein gewünschter Volumenstrom beim Befüllen mit Gießharz erreicht werden kann, andererseits die Größe der Öffnung nicht größer als die Abmessung des dahinter befindlichen Hohlraums ist.

In einer Ausführung wird das Dichtungsband einlagig angebracht, was die Prozesszeit verkürzt, wobei ein Überlapp von bis zu 90° bzw. 25% des Gießpaketumfangs noch als einlagig verstanden wird. In einer anderen Ausführung wird das Dichtungsband mehrlagig bzw. derart angebracht, dass wenigstens eine Lage des Dichtungsbands wenigstens eine andere Lage des Dichtungsbands auf über 90° bzw. über 25% des Gießpaketumfangs, vorzugsweise wenigstens 180° bzw. wenigstens 50% des Gießpaketumfangs, besonders bevorzugt auf 360° bzw. 100% des Gießpaketumfangs, übergreift. Dadurch kann die Stabilität und/oder Abdichtung verbessert werden.

In einer Ausführung sind, vorzugsweise werden, in einer Weiterbildung vor, in einer besonders bevorzugten Weiterbildung nach, dem Anbringen des Dichtungsbandes erzeugend die Abdichtung des zwischen Grund- bzw. Glaskörper und Formschale gebildeten Hohlraums zum Erhalt des Gießpaketes, in dem Dichtungsband zwei oder mehr Öffnungen ausgebildet, wobei der Hohlraum durch eine erste dieser Öffnungen mit dem Gießharz befüllt wird, wobei der Hohlraum auch durch eine oder mehrere zweite dieser Öffnungen mit dem Gießharz befüllt wird, d. h. der Hohlraum durch wenigstens zwei (Einlass)Öffnungen mit dem Gießharz befüllt wird, und/oder beim Befüllen Gas, insbesondere Luft, aus dem Hohlraum durch wenigstens eine zweite dieser Öffnungen entweicht, die entsprechend eine Auslassöffnung bildet. Hierdurch kann das Befüllen verbessert, insbesondere rasch(er) und/oder gleichmäßig(er) und/oder mit reduzierter Blasenbildungswahrscheinlichkeit durchgeführt werden.

In einer Ausführung erfolgt das Ausbilden der mindestens einen bzw. mindestens einer der Öffnung(en) in dem Dichtungsband nach dem Anbringen des Dichtungsbandes, wodurch die (jeweilige) Öffnung vorteilhaft besonders präzise und/oder einfach an der (jeweils) gewünschten Stelle des Gießpakets ausgebildet werden kann. In einer Ausführung erfolgt das Ausbilden der mindestens einen bzw. mindestens einer der Öffnung(en) in dem Dichtungsband mittels einer mechanischen Öffnungsvorrichtung bzw. mechanisch, insbesondere durch Schneiden, Stechen, Stanzen oder dergleichen, wodurch die (jeweilige) Öffnung vorteilhaft besonders rasch, präzise und/oder einfach, insbesondere an einer vorgegebenen Stelle des Gießpakets, ausgebildet werden kann. In einer Ausführung erfolgt das Ausbilden der mindestens einen bzw. mindestens einer der Öffnung(en) in dem Dichtungsband mittels einer thermischen Öffnungsvorrichtung bzw. thermisch, in einer Weiterbildung durch thermische Erwärmung bzw. Zersetzung mit einem heißen Gegenstand bzw. mit einem Gegenstand aufweisend eine heiße Oberfläche, welche in Kontakt mit dem Dichtungsband an der gewünschten Stelle zur Ausbildung der (jeweiligen) Öffnung gebracht wird, wodurch die (jeweilige) Öffnung vorteilhaft mit geringe(re)r Verformung, insbesondere an einer vorgegebenen Stelle des Gießpakets, ausgebildet werden kann. In einer Ausführung erfolgt das Ausbilden der mindestens einen bzw. mindestens einer der Öffnung(en) in dem Dichtungsband mittels Laserlicht, wodurch die (jeweilige) Öffnung vorteilhaft besonders rasch und/oder präzise, insbesondere an einer vorgegebenen Stelle des Gießpakets, ausgebildet werden kann.

Ein weiterer Verfahrensschritt S110 kann das Anordnen des Gießpakets in einer Halteeinrichtung umfassen, wobei dann vorzugsweise das Gießpaket nach dem Befüllen des Hohlraums mit dem Gießharz, vorzugsweise nach einem Verschließen der Öffnung(en) und nach oder besonders bevorzugt vor dem Aushärten des Gießpaketes, in einem weiterer Verfahrensschritt S116 wieder aus der Halteeinrichtung entfernt wird.

Ein weiterer Verfahrensschritt S112 umfasst das Befüllen des Hohlraums des Gießpaketes durch ein Gießharz. Unter einem Gießharz kann insbesondere jede Zusammensetzung verstanden werden, welche im flüssigen bzw. nicht-ausgehärteten Zustand eine Viskosität aufweist von bis zu 800 mPas und/oder welche geeignet ist, nach erfolgter Aushärtung einen Körper auszubilden, der zur Verwendung als Linse bzw. Linsenbeschichtung tauglich ist. Hierunter wird insbesondere verstanden, dass ein solches Gießharz aus einer Zusammensetzung besteht, die bereits vor, bzw. insbesondere nach erfolgter Aushärtung, eine optische Güte im Hinblick auf seine optischen Abbildungseigenschaften aufweist, die einer Verwendung als Linse bzw. Linsenbeschichtung tauglich sind. Das Verfahren eignet sich insbesondere für eine Verwendung höher viskoser bzw. hochviskoser Gießharze. Bevorzugt können als Gießharz transparente Kunststoffmaterialien verwendet werden, wie beispielsweise Poly(thio)urethan, Polymethylmethacrylat, Polycarbonat, Polyacrylat, Polydiethylenglycolbisallylcarbonat oder Kombinationen hiervon. Einem solchen Gießharz können auch weitere Bestandteile beigemengt werden, wie beispielsweise Komponenten, welche ein gewünschtes Absorptionsverhalten herbeiführen, wie insbesondere ein erhöhtes Absorptionsverhalten im UV-Bereich zur Ausprägung eines UV-Schutzes in der späteren Linse. Zusätzlich können auch Bestandteile hinzugefügt werden, welche den Brechungsindex des Gießharzes modifizieren, insbesondere auf den Brechungsindex des Grundkörpers anpassen, um so eine zusätzliche Lichtbrechung an der Grenzfläche zwischen Anguss und Grundkörper zu unterbinden. Zusätzlich können auch Farbstoffe zum Erhalt einer gewünschten Farbe beigemengt werden. Je nach Art und Beschaffenheit der zusätzlichen Komponenten kann es auch erforderlich sein, Farbstoffe zum Kaschieren einer vorliegenden Vorfärbung des Gießharzes beizumengen. Wird beispielsweise über zusätzlich beigemengte Komponenten ein erweiterter Schutz vor der Transmission von Strahlung aus dem ultravioletten und blauen Spektralbereich erzeugt durch erhöhtes Absorptionsverhalten in diesem Spektralbereich, so kann es durch das dadurch bedingte, gezielte Entfernen von Strahlung insbesondere aus dem sichtbaren Spektrum durch, zumindest teilweises Entfernen von blauem Licht, zu einer nicht mehr neutralen Farbwiedergabe von durch die Linse transmittiertem Licht kommen. In einem solchen Fall spricht man vom Vorliegen einer Eigenfärbung, welche im vorstehenden Fall der Linse bzw. Linsenbeschichtung einen Gelbstich verleihen würde. Dies kann wiederum durch Beimengen eines Blaufarbstoffs zu einer neutralen Linsenfärbung korrigiert werden. Bevorzugt erfolgt das Befüllen des Hohlraums mit einem Gießharz aufweisend Polymere, bevorzugt aus mehrwertigen Acrylaten und mehrwertigen Methacrylaten hoher Molekülmasse, und ebenfalls besonders bevorzugt erfolgt das Befüllen des Hohlraums mit einem Gießharz aufweisend Polyaddukte, in einer Ausführung (mit einem Gießharz aufweisend) Polymere, bevorzugt aus mehrwertigen Acrylaten und mehrwertigen Methacrylaten hoher Molekülmasse als Polyaddukte, aus mehrwertigen Isocyanaten, mehrwertigen Thiolen und mehrwertigen Alkoholen in Kombination mit photochromen Farbstoffen, bevorzugt langkettig substituiert wie in WO 2019/238495 offenbart, deren Offenbarung diesbezüglich in die vorliegende Offenbarung einbezogen wird. Vorteilhafterweise kann durch Beimengung insbesondere von photochromen Farbstoffen zu dem Gießharz ein Gießharz zur Ausprägung eines Angusses mit photochromen Eigenschaften erhalten werden, weshalb dieser Anguss auch als photochromer Anguss bezeichnet werden kann. Die Gießharze der oben beschriebenen Polyaddukte neigen zu Präpolymerbildung insbesondere bei längeren Standzeiten. Insbesondere bei Urethangießharzen mit oben angeführten Farbstoffen werden Viskositäten erreicht, die ein einfaches Befüllen verhindern.

In einer Ausführung weist das Gießharz, mit dem der Hohlraum durch die mindestens eine Öffnung befüllt wird bzw. der Anguss (an den Grundkörper) Kunststoffmaterial, vorzugsweise hoher optischer Güte, auf, welches aus polymerisierbaren Molekülen, vorzugsweise optischer Qualität, aufgebaut ist, kann insbesondere aus solchem Kunststoffmaterial bestehen. Diese polymerisierbaren Verbindungen insbesondere können Monomere, Oligomere und Vorpolymere sein. Es werden bevorzugt Einzelne oder Mehrere oder Kombinationen der Folgenden zur Bereitstellung bzw. als thermisch härtbare(r) Polyurethan- und Polythiourethan-Gießharze verwendet: multifunktionale Isocyanate, Isothiocyanate und/oder Episulfide, multifunktionale Alkohole und/oder Thiole. Ebenfalls bevorzugt werden Einzelne oder Mehrere oder Kombinationen der Folgenden zur Bereitstellung bzw. als thermisch und/oder photochemisch härtbare(r) Polyacrylat- und Polymethylmethacrylat-Gießharze verwendet: Multi- und/oder monofunktionale Acrylate und/oder Methylmethacrylate. Ebenfalls bevorzugt werden Einzelne oder Mehrere oder Kombinationen der Folgenden zur Bereitstellung bzw. als thermisch härtbare(r) Polycarbonat- und Polydiethylenglycol-bis(allylcarbonat)-Gießharze verwendet: multi- und/oder monofunktionale Allylcarbonate und/oder Diethylenglycol-bis(allylcarbonate). Zusätzlich oder alternativ zu diesen bevorzugten Materialien können nicht eingeschränkt insbesondere auch andere transparente Kunststoffmaterialien verwendet werden.

In einer Ausführung wird zum Befüllen ein Gießharz ein, vorzugsweise nieder- oder höher-viskoses, Gießharz verwendet wird, welches beim Befüllen und/oder im nicht-ausgehärteten bzw. flüssigen Zustand eine Viskosität von bis zu 800 mPas aufweist.

In einer Ausführung weist das (zum Befüllen verwendete) Gießharz einen oder mehrere, bevorzugt photochrome und/oder organische, Farbstoffen, auf, besonders bevorzugt einen oder mehrere photochrome und organische Farbstoffen, ganz besonders bevorzugt einen oder mehrere Naphthopyranfarbstoffe.

Das Befüllen des Hohlraums des Gießpaktes mit einem solchen Gießharz findet mittels einer dafür geeigneten Vorrichtung statt, mit welcher ein Gießharz durch die bzw. eine oder mehrere der zuvor ausgebildete(n) (Einlass)Öffnung(en) in dem Dichtungsband in den hinter jener bzw. der jeweiligen Öffnung befindlichen, ausgebildeten Hohlraum eingefüllt bzw. jener Hohlraum mittels einer solchen Vorrichtung mit einem Gießharz befüllt werden kann.

Bevorzugt findet ein solches Befüllen durch Injizieren bzw. Einfüllen bzw. Befüllen bzw. Eintropfen des Gießharzes durch die bzw. eine oder mehrere der Einfüllöffnung(en) in den hinter der Einfüllöffnung befindlichen Hohlraum des Gießpaktes statt. Der durch den Spalt zwischen der Formschale und dem Grundkörper des Gießpaketes gebildete Hohlraum wird auch als Spalt bzw. insbesondere als Angussspalt bezeichnet. In einer Ausführung erfolgt das Befüllen mit bzw. Injizieren bzw. Einfüllen bzw. Befüllen bzw. Eintropfen von Gießharz durch die bzw. eine oder mehrere der Einfüllöffnung(en) nicht durch eine Röhre, durch welche die jeweilige Einfüllöffnung ausgebildet worden ist und die nach diesem Ausbilden zum Befüllen wenigstens teilweise in der jeweiligen Einfüllöffnung verbleibt, insbesondere also nicht durch Injizieren über eine zum Ausbilden der entsprechenden Einfüllöffnung verwendete und anschließenden nach diesem Ausbilden zum Befüllen die entsprechende bzw. von ihr ausgebildete Einfüllöffnung durchgreifende Nadel. Besonders bevorzugt erfolgen das Befüllen mit bzw. Injizieren bzw. Einfüllen bzw. Befüllen bzw. Eintropfen von Gießharz durch eine oder mehrere der Einfüllöffnungen durch wenigstens eine Röhre mit wenigstens einem Kanal und das Ausbilden dieser bzw. der jeweiligen Einfüllöffnung(en) durch eine von dieser Röhre verschiedenen Vorrichtung, die insbesondere auch eine, gegebenenfalls andere, Nadel sein kann. Weiter bevorzugt kann das Ausbilden der Einfüllöffnung im Dichtungsband, beispielsweise durch eine Nadel, zeitlich und/oder räumlich getrennt vom Anordnen einer Röhre zum Befüllen mit Gießharz erfolgen. Beispielsweise kann das Dichtungsband als Rollenware mit bereits, insbesondere in einem vorbestimmten Abstand, ausgebildeten Einfüllöffnungen bereitgestellt werden.

Das Gießpaket kann bei der Befüllung in einer beliebigen Orientierung vorliegen. Bevorzugt wird ein Gießpaket verwendet, welches genau zwei ausgebildete Öffnungen aufweist, wovon eine erste Öffnung als Einlassöffnung und eine zweite Öffnung als Auslassöffnung fungiert. Ein solches bevorzugtes Gießpaket ist bei der Befüllung bevorzugt derart orientiert, dass Grundkörper und Formschale horizontal benachbart, d.h. nebeneinander entlang einer horizontalen Achse, angeordnet sind und dass das Gießpaket zusätzlich dabei derart orientiert ist, dass die Auslassöffnung oberhalb bzw. höher im Hinblick auf eine senkrechte Achse des Gießpaktes als die Einlassöffnung ist. Bevorzugt findet das Befüllen in einer senkrechten bzw. lotgerechten Anordnung statt, worunter verstanden wird, dass die Auslassöffnung auf der oberen Seite befindlich ist und den höchsten Punkt des Gießpaketes bildet, und die Einlassöffnung auf der unteren Seite des Gießpaketes befindlich ist und den niedrigsten Punkt des Gießpaketes bildet, d. h. der Massestrom beim Befüllen des Gießharzes findet entgegen der Gravitationsrichtung statt. Auch alternative Anordnungen sind denkbar und bevorzugt, solange das Befüllen dergestalt erfolgt, dass der Massestrom beim Befüllen zumindest noch im Wesentlichen entgegen der Gravitationsrichtung stattfindet. In einer Ausführung erfolgt das Befüllen des Hohlraums unter Überdruck, insbesondere gegenüber einem Umgebungs(luft)druck, und/oder zumindest teilweise entgegen der Gravitationsrichtung. Alternativ kann das Gießpaket auch bei der Befüllung liegend vorliegen, worunter verstanden wird, dass der das Gießpaket in einer Lage vorliegt, in der der Grundkörper oberhalb der Formschale bzw. in der die Formschale oberhalb des Grundkörpers vorliegt. In einem solchen Fall findet das Befüllen bevorzugt durch mehrere Öffnungen, insbesondere gleichzeitig, statt. Zweckmäßigerweise wird das Gießpaket in einer Halteeinrichtung angeordnet, um die erste und zweite Öffnung gemäß einer gewünschten Positionierung orientiert zu halten. Dabei wird das Gießpaket bevorzugt vor dem Einfüllen des Gießharzes in der Halteeinrichtung angeordnet und kann nach dem Einfüllen, insbesondere nach dem Aushärten, aus der Halteinrichtung entnommen werden. Durch das Befüllen unter Überdruck, das Befüllen zumindest teilweise entgegen der Gravitationsrichtung und ganz besonders das Befüllen unter Überdruck und zumindest teilweise entgegen der Gravitationsrichtung kann das Befüllen verbessert, insbesondere rasch(er) und/oder gleichmäßig(er) und/oder mit reduzierter Blasenbildungswahrscheinlichkeit durchgeführt werden.

Es versteht sich, dass eine Vorrichtung vorgesehen werden kann, welche zum Ausbilden der bzw. einer oder mehrerer der Öffnung(en) in einem Dichtungsband eines Gießpaketes bzw. zum Evakuieren eines Hohlraums eines Gießpaketes sowie zum Befüllen eines Gießpaketes mit einem Gießharz und zum Verschließen einer ausgebildeten Öffnung in einem Gießpaket geeignet ist. Zweckmäßigerweise kann diese Vorrichtung Mittel zum Durchstechen des Dichtungsbandes und Befüllen aufweisen, beispielsweise eine scharfkantige Hohlnadel. Hohlnadeln können allerdings beim Verschließen einer ausgebildeten Öffnung in einem Gießpaket zu Druckverlust neigen, den Volumenstrom einschränken und den Austritt von Gießharz begünstigen. Daher ist es, wie bereits erwähnt, besonders bevorzugt, zum Befüllen des Gießpaketes mit Gießharz durch eine oder mehrere (der Einfüll)Öffnung(en) in einem Dichtungsband eines Gießpaketes eine oder mehrere ein- oder mehrkanalige Röhren, insbesondere Hohlnadel(n), die an die jeweilige(n) Öffnung(en) anschließen oder diese durchgreifen, und zum Ausbilden dieser Öffnung(en) eine von dieser/-n Röhren verschiedene Vorrichtung zu verwenden, wobei diese gleichermaßen mit der bzw. den Röhre(n) auf einem gemeinsamen, insbesondere beweglichen, Träger angeordnet sein kann, um so vorzugsweise das Ausbilden der Öffnung(en) und Befüllen zeitnah und/oder mit wenig(er) Verstellungen zu realisieren, oder separat von der bzw. den Röhre(n) aktuierbar sein kann, um so vorzugsweise die Vorrichtung und/oder Verstellung zu vereinfachen. Besonders bevorzugt ist ein, vorzugsweise aufliegendes, Dichtelement ausgebildet, um die Durchstichstelle fluidisch abzudichten.

In einer besonders bevorzugten Ausführung umfasst das Befüllen des Hohlraums ein Befüllen des Hohlraums mit dem Gießharz aus einem Gießharzreservoir, durch eine ein- oder mehrkanalige Zuleitung, ein, vorzugsweise bezüglich des Gießharzes, abdichtendes Formteil, das während des Befüllens wenigstens zeitweise, vorzugsweise mit einer Kontaktfläche, an dem Gießpaket aufliegt, und die bzw. eine oder mehrere der (Einlass)Öffnung(en). Das Formteil weist in einer Ausführung wenigstens eine elastische Schicht zum Kontaktieren des bzw. Aufliegen an dem Gießpaket(s) auf, kann insbesondere aus einem elastischen und entsprechend anschmiegsamen Material bestehen, insbesondere kann die elastische Schicht bzw. das elastische Material die Kontaktfläche des Formteils aufweisen bzw. bilden.

In einer Ausführung werden das Formteil und das Gießpaket, in einer vorteilhaften Weiterbildung mit einem definierten und/oder einstellbaren bzw. eingestellten Anpressdruck und/oder mittels einer ein- oder mehrteiligen Anpressvorrichtung, die in einer Ausführung eine, vorzugsweise mechanische, hydraulische oder pneumatische, ein- oder mehrteilige Federung und/oder eine, vorzugsweise verstellbare, bevorzugt motorisch, hydraulisch oder pneumatisch, in einer Ausführung robotisch, verstellbare, ein- oder mehrteilige mechanische Führung aufweist, insbesondere sein kann, gegeneinander gepresst.

Eine Elastizität bzw. Nachgiebigkeit zum Bewirken des, vorzugsweise definierten und/oder einstellbaren bzw. eingestellten, Anpressdrucks kann insbesondere durch eine Elastizität bzw. Nachgiebigkeit des Gießpakets, insbesondere des Dichtungsbands, und/oder, besonders vorteilhaft, durch eine Elastizität bzw. Nachgiebigkeit des Formteils, insbesondere der elastischen Schicht(en) bzw. des elastischen Materials, und/oder, ebenfalls besonders vorteilhaft, durch die Federung ausgebildet bzw. bereitgestellt sein.

Entsprechend werden in einer Ausführung das Formteil und das Gießpaket durch eine entsprechende Positionierung des Formteils relativ zu dem Gießpaket, vorzugsweise durch die mechanische Führung, und/oder des Gießpakets relativ zu dem Formteil, vorzugsweise durch die mechanische Führung, und/oder unter Kompression des Gießpakets und/oder, besonders vorteilhaft, der Federung und/oder des Formteils gegeneinander gepresst.

In einer Ausführung wird die mechanische Führung manuell oder durch wenigstens einen, vorzugsweise elektromotorischen, hydraulischen oder pneumatischen, Aktuator verstellt. In einer Ausführung weist die mechanische Führung eine, vorzugsweise einstellbare und/oder reib- und/oder formschlüssige, Fixierung zum Fixieren des Formteils relativ zu dem Gießpaket und/oder des Gießpakets relativ zu dem Formteil auf.

In einer Ausführung ist das Formteil in einer Vorspannrichtung beweglich und das Gießpaket in der Vorspannrichtung fest bzw. starr abgestützt, wobei das Formteil in der Vorspannrichtung durch die Anpressvorrichtung, in einer Weiterbildung eine, vorzugsweise mechanische, hydraulische oder pneumatische, Federung und/oder eine, vorzugsweise motorisch, hydraulisch oder pneumatisch, in einer Ausführung robotisch, verstellbare, mechanische Führung, gegen das Gießpaket gepresst wird. Dadurch kann eine besonders vorteilhafte Halterung des Gießpakets realisiert werden.

In einer anderen Ausführung ist umgekehrt das Gießpaket in einer Vorspannrichtung beweglich und das Formteil in der Vorspannrichtung fest bzw. starr abgestützt, wobei das Gießpaket in der Vorspannrichtung durch die Anpressvorrichtung, in einer Weiterbildung eine, vorzugsweise mechanische, hydraulische oder pneumatische, Federung und/oder eine, vorzugsweise motorisch, hydraulisch oder pneumatisch, in einer Ausführung robotisch, verstellbare, mechanische Führung, gegen das Formteil gepresst wird. Dadurch kann eine besonders vorteilhafte Zufuhr von Gießharz realisiert werden.

In einer weiteren Ausführung ist das Formteil in einer Vorspannrichtung beweglich und das Gießpaket in der Vorspannrichtung ebenfalls beweglich, wobei das Formteil in der Vorspannrichtung durch die Anpressvorrichtung, in einer Weiterbildung eine, vorzugsweise mechanische, hydraulische oder pneumatische, (Teil)Federung und/oder eine, vorzugsweise motorisch, hydraulisch oder pneumatisch, in einer Ausführung robotisch, verstellbare, mechanische (Teil)Führung, gegen das Gießpaket gepresst wird und das Gießpaket in der Vorspannrichtung durch die Anpressvorrichtung, in einer Weiterbildung eine, vorzugsweise mechanische, hydraulische oder pneumatische, (Teil)Federung und/oder eine, vorzugsweise motorisch, hydraulisch oder pneumatisch, in einer Ausführung robotisch, verstellbare, mechanische (Teil)Führung, gegen das Formteil gepresst wird. Beispielsweise kann also das Gießpaket durch eine (Teil)Federung nachgiebig abgestützt sein und das Formteil durch eine motorisch, hydraulisch oder pneumatisch, in einer Ausführung robotisch, verstellbare, mechanische Führung und/oder eine (Teil)Federung gegen das Gießpaket gepresst werden oder umgekehrt. Dadurch kann eine besonders vorteilhafte Befüllung und/oder Abdichtung realisiert werden.

Eine hier genannte (Teil)Federung weist vorzugsweise eine oder mehrere mechanische, hydraulische oder pneumatische Druckfedern auf. Eine hier genannte mechanische Führung kann durch einen ein- oder mehrachsigen Roboter, insbesondere Roboterarm, oder dergleichen verstellt werden bzw. verstellbar sein, wobei unter einem mehrachsigen Roboter(arm) ein ein-, zwei-, drei- oder mehrachsiger Manipulator zum Verschieben in einer, zwei oder drei Raumrichtungen und/oder Verdrehen um eine, zwei oder drei Raumrichtungen verstanden wird. Entsprechend umfasst in einer Ausführung eine Vorrichtung zur Durchführung eines hier beschriebenen Verfahrens, in einer Weiterbildung die Anpressvorrichtung, einen solchen ein- oder mehrachsigen Manipulator bzw. Roboter, insbesondere kann also durch die mittels des Manipulators bzw. Roboters motorisch, hydraulisch oder pneumatisch verstellbare mechanische Führung, gegebenenfalls zunächst, das Formteil an das Gießpaket (her)angefahren und/oder, gegebenenfalls anschließend, mit einem definierten und/oder einstellbaren bzw. eingestellten Anpressdruck gegen das fest abgestützte oder nachgiebig gelagerte Gießpaket gepresst werden. Gleichermaßen kann beispielsweise das Formteil manuell relativ zum Gießpaket oder das Gießpaket manuell relativ zum Formteil positioniert und in dieser Position durch die mechanische Führung fixiert werden, wobei durch Kompression des Gießpakets und/oder, besonders bevorzugt, des, entsprechend elastischen, Formteils und/oder einer, gegebenenfalls zusätzlich vorgesehenen, Federung, das Formteil und das Gießpaket mit einem definierten Anpressdruck gegeneinander gepresst werden.

Durch eines oder mehrere der vorgenannten Merkmale bzw. Ausführungen, insbesondere das Formteil und vorzugsweise die Anpressvorrichtung kann gegenüber einem in den Hohlraum eingeführten Kanal, insbesondere eine durch das Dichtungsband bzw. (eine) seine(r) (Einlass)Öffnung(en) eingeführte Kanüle oder dergleichen, eine bessere Abdichtung erreicht werden. Besonders vorteilhaft ist die Kombination des vorstehend beschriebenen Anpressens mit dem Ausbilden mindestens einer Öffnung in dem Dichtungsband nach dem Anbringen des Dichtungsbandes mittels einer Öffnungsvorrichtung, da dadurch diese Öffnung(en) optimal abgedichtet werden können.

In einer Ausführung weist das Formteil bzw. seine Kontaktfläche wenigstens eine Öffnung, insbesondere Ausgangs- vorzugsweise Durchgangsöffnung, auf, welche wenigstens während des Befüllens (in Durchströmungsrichtung des Gießharzes) direkt an die bzw. wenigstens eine der (Einlass)Öffnung(en) in dem Dichtungsband anschließt. Das Formteil kann ein- oder mehrteilig ausgebildet sein, wobei das Formteil bzw. eines oder mehrere seiner Teile (jeweils) eine oder mehrere solche Öffnungen aufweisen kann/können. Dabei kann eine Zuordnung besonders vorteilhaft sein, bei der an die bzw. jede der Einlassöffnung(en) in dem Dichtungsband jeweils eine (eigene) Öffnung des Formteils bzw. seiner, gegebenenfalls mehrteiligen, Kontaktfläche direkt anschließt. Dadurch kann eine besonders vorteilhafte Abdichtung und/oder Befüllung realisiert werden. Gleichermaßen kann auch die bzw. wenigstens eine der Öffnung(en) des Formteils an zwei oder mehr (Einlass)Öffnungen in dem Dichtungsband anschließen bzw. diese (Einlass)Öffnungen durch dieselbe Öffnung des Formteils bzw. seiner Kontaktfläche versorgt bzw. durchströmt werden. Dadurch kann der Aufbau und/oder die Positionierung des Formteils vereinfacht werden.

In einer Ausführung umgibt bzw. umschließt bzw. umgreift ein Rand der bzw. ein Rand wenigstens einer der Öffnung(en) des Formteils bzw. seiner Kontaktfläche (jeweils) vollständig einen Rand der an diese anschließenden (Einlass)Öffnung(en) in dem Dichtungsband. Dadurch kann eine besonders vorteilhafte Abdichtung und/oder Befüllung realisiert werden. In einer Ausführung umgibt bzw. umschließt bzw. umgreift ein Rand der bzw. ein Rand wenigstens einer der (Einlass)Öffnung(en) in dem Dichtungsband (jeweils) vollständig einen Rand der an diese anschließenden Öffnung(en) des Formteils bzw. seiner Kontaktfläche. Dadurch kann der Aufbau und/oder die Positionierung des Formteils vereinfacht werden.

In einer Ausführung wird das Formteil und/oder die Öffnungsvorrichtung relativ zu dem in der Halteeinrichtung angeordneten Gießpaket mittels einer bzw. der mechanischen Führung verstellt. Dadurch kann das Befüllen bzw. Ausbilden der Öffnung(en) verbessert werden.

In einer Ausführung wird der Hohlraum vor dem Befüllen evakuiert, in einer Weiterbildung mittels der Öffnungsvorrichtung oder dem aufliegenden Formteil, das hierzu zunächst mit einer Saugpumpe verbunden und anschließend zu dem Gießharzreservoir umgeschaltet werden kann.

Das Gießharzreservoir kann in einer Ausführung eine Druckvorrichtung zum Befüllen des Hohlraums unter Überdruck (gegenüber dem Umgebungs(luft)druck) aufweisen. Dadurch kann eine besonders vorteilhafte Befüllung realisiert werden.

In einem weiteren Verfahrensschritt S114 kann nach erfolgter Befüllung die vorhandene Öffnung bzw. können, bei Vorhandensein mehrerer Öffnungen, alle vorhandenen Öffnungen im Dichtungsband, verschlossen werden. Hierunter sind alle Mittel denkbar, die dazu führen, dass die vorhandene Öffnung bzw. die vorhandenen Öffnungen anschließend verschlossen sind, wie insbesondere das erneute Anbringen einer weiteren Lage eines Dichtungsbandes, bevorzugt einer weiteren Lage des in einem vorangegangenen Schritt bereits applizierten Dichtungsbandes. Alternativ können die Öffnungen auch verschlossen werden durch gezielt induzierte Präpolymerisation bzw. Gelierung des eingefüllten Gießharzes, wahlweise hervorgerufen durch thermische Energie, beispielsweise durch einen fokussierten Laserpuls, oder durch photochemische Reaktion durch gezielte Bestrahlung mit elektromagnetischer Strahlung einer geeigneten, die Präpolymerisation hervorrufenden, Wellenlänge, wie beispielsweise einem UV-Laserpuls, erfolgen. Auf diese Weise findet ein erstes Aushärten bzw. ein Gelieren dergestalt statt, dass das Gießharz bei Umlagerung des Gießpaketes in eine Aushärtevorrichtung nicht durch eine der Öffnungen des Gießpaketes heraustreten kann. Dies ist insbesondere zu vermeiden, da solche Gießharze oft aus gesundheitsschädlichen Isocyanaten bestehen und zu keinem Zeitpunkt mit Fertigungspersonal in direkten Kontakt kommen sollten. Zusätzlich kann derart austretendes Gießharz auch zu einer irreversiblen Verschmutzung bzw. Beschädigung des Grundköpers führen, so dass dieser verworfen werden muss. Entsprechend wird das Gießpaket in einer Ausführung in einem weiteren Verfahrensschritt S116 aus der Halteeinrichtung entfernt und vorzugsweise zum, gegebenenfalls weiteren bzw. vollständigen, Aushärtung in eine Aushärtevorrichtung überführt.

In einem weiteren Verfahrensschritt S118 kann das Gießpaket, insbesondere vollständig, ausgehärtet werden, worunter insbesondere verstanden wird, dass ein Aushärtevorgang initiiert wird, welcher dazu führt, dass das befüllte Gießharz in einen festen Zustand überführt wird. Je nach Art und Beschaffenheit des Gießharzes bzw. der das Gießharz bildenden Komponenten kann ein solcher Aushärtevorgang wahlweise thermisch oder photochemisch, sowie als eine Kombination beider, stattfinden. Entsprechend umfasst in einer Ausführung das Aushärten des Gießpaketes ein thermisches und/oder photochemisches und/oder vollständiges Aushärten des Gießpaketes. Für eine thermische Aushärtung wird das Gießpaket in einem Ofen als bevorzugter thermischer Aushärtevorrichtung ausgehärtet, wobei das Gießpaket in diesem Ofen bei einer Temperatur und für eine Dauer geeignet zur Aushärtung des verwendeten Gießharzes verbleibt. Für eine photochemische Aushärtung wird das Gießpaket in einer Vorrichtung ausgehärtet, aufweisend zumindest eine Aufnahme, geeignet zur Aufnahme des Gießpaktes, und eine Strahlungsquelle, geeignet zur Emission elektromagnetischer Strahlung einer Wellenlänge geeignet zur Aushärtung des Gießharzes. In einer solchen photochemischen Aushärtevorrichtung wird das Gießpaket mit aus der Strahlungsquelle emittierter Strahlung einer gewissen Wellenlänge und Energie bzw. Energiedichte für eine vorgegebene Dauer bestrahlt, um eine Aushärtung des Gießharzes zu erreichen.

In einem weiteren Verfahrensschritt wird das Gießpaket nach erfolgter Aushärtung aus der Aushärtevorrichtung entnommen. Das Dichtungsband wird in einem weiteren Verfahrensschritt S120 entfernt. Bevorzugt wird hierunter ein Ablösen des Dichtungsbandes verstanden, was durch eine geeignete Vorrichtung stattfinden kann.

In einem weiteren Verfahrensschritt S122 wird das Gießpaket entformt, worunter das Entfernen der Formschale verstanden wird. Nach Entfernen der Formschale liegt eine Linse vor, gebildet aus einem mit einem Anguss bzw. einem Überfang bzw. einer Schicht bzw. einer Beschichtung versehenen Grundkörper. Die so hergestellte Linse kann auch als mehrlagige Linse bzw. insbesondere als zweilagige Linse bezeichnet werden.

Wie bereits betont, können eine oder mehrere der vorgenannten (weiteren) Verfahrensschritte auch entfallen, beispielsweise das Ausbilden mindestens einer Öffnung in dem Dichtungsband, das Verschließen der Öffnung und/oder das Aushärten des Gießpaketes.

Bevorzugt wird die Verbesserung des Einströmverhaltens des Gießharzes durch eine geeignete Aufweitung des Angussspaltes an zumindest der Einlassöffnung bereitgestellt. Dies kann bevorzugt über eine Formschale erfolgen, die zumindest in einem Bereich um die Einlassöffnung eine leicht abweichende Randgeometrie, bevorzugt realisiert als eine Facette, aufweist. Aufgrund dieser Facettierung der Formschale ist im Bereich der Einlassöffnung der Abstand zwischen Formschale und Grundkörper etwas vergrößert, was zu einem vergrößerten Spalt bzw. zum Ausbilden einer kleinen Kammer hinter der Einlassöffnung führt. Hierdurch wird ein verwirbelungsfreies Einströmen des Gießharzes beim Befüllen erreicht, was zu einer verringerten Schlierenbildung und zu verminderten Gaseinschlüssen führt. In einer weiteren Ausführungsform kann die Aufweitung des Angussspaltes auch dadurch erreicht werden, dass anstelle der Facettierung der Formschale eine entsprechend angepasste Geometrie des Grundkörpers im Bereich der Einlassöffnung vorliegt, was bevorzugt als Facettierung des Grundkörpers, zumindest im Bereich der Einlassöffnung, erreicht wird. Alternativ oder zusätzlich kann eine Aufweitung des Angussspaltes realisiert werden, indem sowohl Formschale als auch Grundkörper eine Aufweitung aufweisen, bevorzugt weisen sowohl Formschale als auch Grundkörper eine solche Facettierung auf. Die in den verschiedenen Ausführungsformen diskutierte Facettierung liegt dabei zumindest an der Stelle der Einlassöffnung vor, kann aber auch umlaufend realisiert werden und sich so auf die gesamte Formschale bzw. auf den gesamte Grundkörper erstrecken. Vorteilhafterweise werden durch eine solche Aufweitung Verwirbelungen und Konvektion des Gießharzes vermieden, wodurch das Auftreten von Abgussschlieren, Inhomogenitäten, und dadurch bedingten, lokal geänderten optischen Eigenschaften des Angusses vermieden wird. Neben dem verbesserten Einströmen des Gießharzes wird durch die Aufweitung des Angussspaltes auch das Anbringen von Einflußöffnungen großen Durchmessers erleichtert. In Kombination mit der abdichtenden Befüllvorrichtung können so auch insbesondere bei höherviskosen Gießharzen hohe Volumenströme erreicht werden.

In einer Ausführung weist der gebildete Hohlraum in einem Bereich um die bzw. eine oder mehrere der Öffnung(en) in dem Dichtungsband eine Spaltaufweitung bzw. lokale Vergrößerung der Spaltbreite auf, wobei die Spaltbreite an einer Stelle des Hohlraums insbesondere der kürzeste Abstand zwischen den einander zugewandten Oberflächen von Grundkörper und Formschale an dieser Stelle des Hohlraums sein kann. In einer Weiterbildung weist der Grundkörper oder bevorzugt die Formschale und der Grundkörper (jeweils) oder besonders bevorzugt die Formschale alleine zumindest in einem Abschnitt der Spaltaufweitung eine stetige, vorzugsweise lineare, Rücknahme der hohlraumbegrenzenden Oberfläche auf.

Durch die Ausbildung der Spaltaufweitung durch entsprechende Formgebung der Formschale kann die Spaltaufweitung besonders vorteilhaft, insbesondere einfach(er), realisiert werden, vorteilhafterweise kann dabei eine Formgebung des Grundkörpers vermieden werden, die dessen optische Eigenschaften und/oder nutzbaren Bereich und/oder Weiterbearbeitung beeinflusst und/oder aufwändig(er) herzustellen ist als an der Formschale. Durch eine stetige, vorzugsweise lineare, Rücknahme der hohlraumbegrenzenden Oberfläche kann eine besonders vorteilhafte Befüllung bzw. Gießharzströmung bewirkt und/oder die Spaltaufweitung besonders einfach und/oder prozesssicher erzeugt werden.

In einer Ausführung erstreckt die Spaltaufweitung sich über den ganzen Umfang des Hohlraums. Dadurch kann eine besonders vorteilhafte Befüllung bzw. Gießharzströmung bewirkt werden.

In einer Ausführung wird bei der erhaltenen Linse zumindest ein die Spaltaufweitung begrenzender Grundkörperrand entfernt, in einer Weiterbildung materialabtragend oder trennend. Dadurch beeinträchtigt die zum vorteilhaften Befüllen bzw. (Mit)Ausbilden der Spaltaufweitung vorgesehene Formgebung des Grundkörpers die fertige Linse nicht.

In einer Ausführung werden ein oder mehrere Parameter des Verfahrens, in einer Weiterbildung wenigstens ein Parameter des Befüllen des Hohlraums durch die mindestens eine Öffnung mit dem Gießharz, vorzugsweise ein Druck beim Befüllen oder dergleichen, in Abhängigkeit von einer Viskosität des Gießharzes eingestellt, in einer Weiterbildung während der Durchführung des (entsprechenden) Verfahrens(schrittes) angepasst, vorzugsweise (nach)geregelt. Insbesondere kann eine Viskositätserhöhung über die Standzeit dadurch wenigstens teilweise kompensiert werden, dass beispielsweise der Druck beim Befüllen entsprechend erhöht wird.

Ein Aspekt betrifft eine nach dem erfindungsgemäßen Verfahren hergestellte Linse bzw. eine mit zumindest einer solchen Linse versehene Brille oder Kontaktlinse. Es versteht sich, dass die Anwendung einer solchen Linse nicht nur auf die Brillenoptik bzw. Kontaktlinsen beschränkt ist, sondern auch bei anderen optischen Linsen auf den Gebieten der Fotografie, Projektion, Mikroskopie, Beleuchtung beispielsweise in Mobilfunkgeräten, Scheinwerfern, optischen Messinstrumenten, etc. Verwendung finden kann.

Ein Aspekt betrifft eine bzw. die Vorrichtung zur Durchführung eines erfindungsgemäßen Verfahrens, die entsprechend eine oder mehrere der folgenden Vorrichtungen umfasst:
- eine bzw. die Öffnungsvorrichtung zum Ausbilden der mindestens einen Öffnung in dem Dichtungsband,
- eine bzw. die Halteeinrichtung zum Anordnen und Entnehmen des Gießpakets,
- ein bzw. das Gießharzreservoir, eine bzw. die Zuleitung und ein bzw. das abdichtende Formteil zum Befüllen des Hohlraums durch die mindestens eine Öffnung mit dem Gießharz, in einer Weiterbildung eine bzw. die Anpressvorrichtung zum Pressen des Formteils und Gießpakets gegeneinander,
- eine bzw. die Vorrichtung zum Verschließen der mindestens einen Öffnung, und
- eine bzw. die Aushärtevorrichtung zum Aushärten des Gießpaketes.

Ein Aspekt betrifft ein bzw. das Gießpaket, insbesondere ein bzw. das durch ein erfindungsgemäßes Verfahren erhaltene bzw. in einem erfindungsgemäßen Verfahren verwendete, Gießpaket, das zumindest umfasst:
- einen bzw. den Grundkörper,
- eine bzw. die Formschale, und
- ein bzw. das Dichtungsband,
wobei zwischen Grund- bzw. Glaskörper und Formschale der leere oder mit dem, insbesondere ausgehärteten, Gießharz befüllte Hohlraum ausgebildet ist.

In einer Ausführung werden ein oder mehrere, insbesondere alle, Schritte des Verfahrens vollständig oder teilweise automatisiert durchgeführt, insbesondere mithilfe der Vorrichtung.

Weitere Vorteile und Merkmale ergeben sich aus den Unteransprüchen und den Ausführungsbeispielen bzw. nachstehend in den Figuren beschriebenen bevorzugten Ausführungsformen. Hierzu zeigt:
- Fig. 1:: eine schematische Zeichnung einer Ausführungsform eines Gießpaketes 1 in einer frontalen Ansicht, worin Formschale 11 und Grundkörper 10 in Blickrichtung hintereinander angeordnet sind, mit angeordneter Befüllvorrichtung 2;
- Fig. 2:: eine Schnittzeichnung der Fig. 1 entlang der Achse A,
- Fig. 3:: eine vergrößerte Darstellung des Bereichs Z aus Fig. 2 mit drei verschiedenen Ausführungsformen zur Realisierung einer Aufweitung 5 (5a, 5b, 5c) des Angussspaltes,
- Fig. 4:: eine Ausführungsform einer Vorrichtung zum Ausbilden einer Öffnung in einem Dichtungsband eines Gießpaktes,
- Fig. 5:: ein Verfahren nach einer Ausführungsform der vorliegenden Erfindung, und
- Fig. 6 - Fig. 8:: verschiedene Diagramme zur Viskosität und Photochromie.

In den unterschiedlichen Figuren stellen identische Bezugszeichen jeweils gleiche Elemente dar.

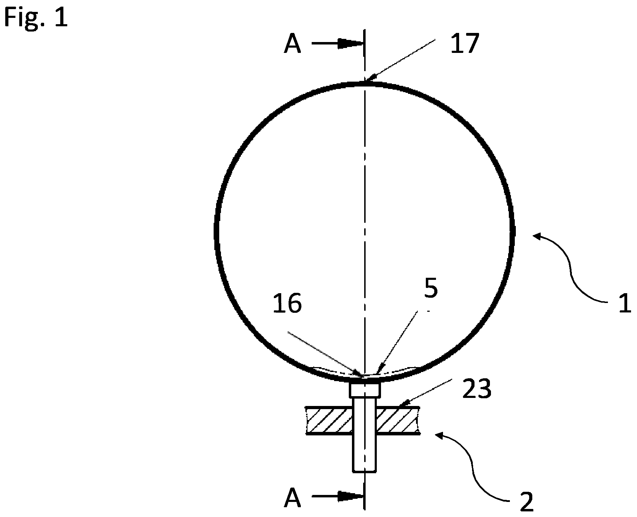

Fig. 1 zeigt eine schematische Zeichnung eines Gießpaketes 1 in einer frontalen Ansicht. Die das Gießpaket bildend Formschale bzw. vordere Gießform 11 und der Grundkörper, im Ausführungsbeispiel ein Kunststoffgrundglas 10, sind hierbei hintereinander angeordnet und daher nicht dargestellt. Entlang der vertikalen Achse des Gießpaketes 1 wurde eine Achse A eingezeichnet.

Das Gießpaket 1 weist gemäß einer bevorzugten Ausführungsform eine Aufweitung 5 des Angussspaltes im Bereich der Einlassöffnung 16 sowie eine Auslassöffnung 17 auf. In nicht dargestellten Abwandlungen kann die Auslassöffnung 17 entfallen oder mehr als eine Auslassöffnung vorgesehen sein, es können mehr als (die) eine Einlassöffnung 16 vorgesehen sein, Ein- und/oder Auslassöffnung(en) können anders positioniert sein und/oder die Aufweitung 5 kann anders ausgeformt sein, sich in einer besonders bevorzugten Abwandlung über den ganzen Umfang bzw. 360° erstrecken.

Zusätzlich zeigt Fig. 1 eine Befüllvorrichtung 2, welche an der Einlassöffnung 16 angeordnet wurde. Die Befüllvorrichtung 2 weist in einer Ausführungsform ein Element 23 zur mechanischen Führung auf, mit welchem die Befüllvorrichtung 2 mittels eines Roboterarms als bevorzugtem, mechanischen Führungsmittel, insbesondere durch Verbinden des Roboterarms mit der mechanischen Führung 23 der Befüllvorrichtung 2, die Befüllvorrichtung 2 präzise an die Einlassöffnung 16 angeordnet werden kann.

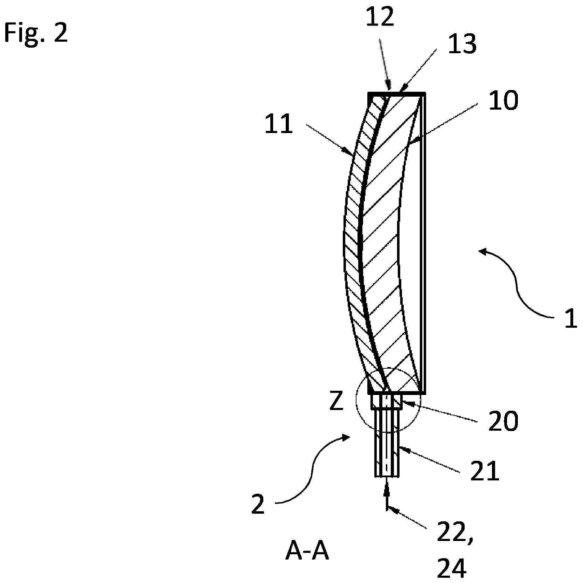

Fig. 2 zeigt eine Schnittzeichnung der Fig. 1 entlang der Achse A-A. Das Gießpaket 1 weist einen Grundkörper 10 und eine Formschale 11 auf, wobei Grundkörper 10 und Formschale 11 derart zueinander positioniert sind, dass sich zwischen Grundkörper 10 und Formschale 11 ein Hohlraum 12 ausbildet, welcher mit einem Gießharz befüllt werden kann. Grundkörper 10 und Formschale 11, sowie der zwischen beiden befindliche Hohlraum 12, sind mit einem Dichtungsband 13, bevorzugt umlaufend, gas- und flüssigkeitsundurchlässig abgedichtet bzw. verschlossen. In der hier dargestellten Ausführungsform ist unterhalb an das Gießpaket eine Befüllvorrichtung 2 angeordnet, aufweisend ein aufliegendes und abdichtendes Formteil 20, welches bevorzugt aus einem elastischen und anschmiegsamen Material realisiert ist, um ein passgenaues Anordnen der Befüllvorrichtung 2 an das Gießpaket 1 zu ermöglichen. Bevorzugt wird das Material des abdichtenden Formteils 20 derart gewählt, dass es eine hohe chemische Beständigkeit gegenüber den verwendeten Gießharzen aufweist. Die Befüllvorrichtung 2 weist ferne eine Zuleitung 21 auf, durch welche das Gießharz während des Befüllvorgangs aus einem Gießharzreservoir 24 in den Hohlraum 12 des Gießpaketes 1 geleitet werden kann. In einer bevorzugten Ausführungsform weist die Befüllvorrichtung 2, in einer Ausführung das Gießharzreservoir 24, eine Druckvorrichtung 22 auf. Mittels dieser Druckvorrichtung 22 kann einerseits der Hohlraum 12 vor der Befüllung evakuiert werden, um das zusätzliche Ausbilden einer Druckausgleichsöffnung 17, worunter das Ausbilden einer Auslassöffnung 17 zum Entweichen der beim Befüllen verdrängten, in dem Hohlraum befindlichem, Luft verstanden wird. Ferner ist die Druckvorrichtung 22 ebenfalls geeignet, das Befüllen des Hohlraums 12 mit einem Gießharz unter einem vorgegebenen Druck stattfinden zu lassen. Vorteilhafterweise kann dadurch das Befüllen des Hohlraums 12 mit einem Gießharz unter einem erhöhten Druck stattfinden, wodurch eine kürze Zeitdauer des Befüllvorgangs erreicht wird, insbesondere bei der Verwendung von Gießharzen hoher Viskosität.

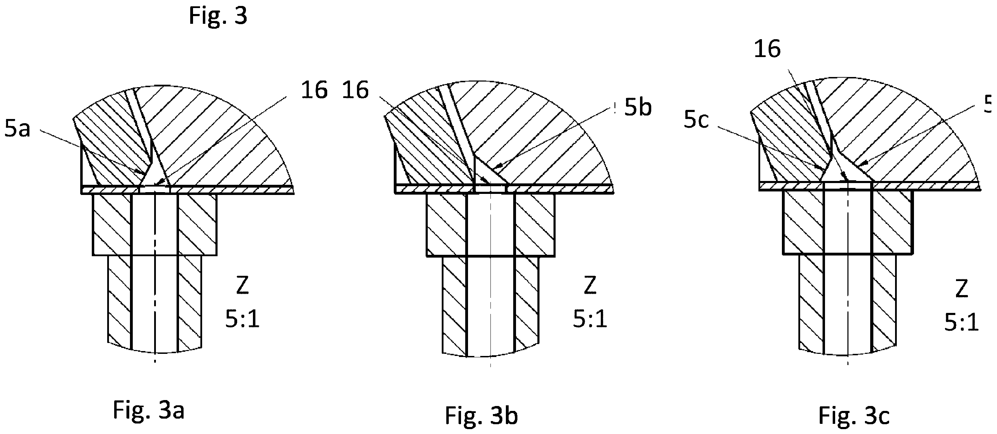

Fig. 3 zeigt für drei unterschiedliche Ausführungsformen jeweils eine vergrößerte Darstellung des Bereichs Z aus Fig. 2. Der Bereich hinter der Einlassöffnung 16 weist in diesen Ausführungsformen jeweils eine Aufweitung 5 (5a, 5b, 5c) auf, insbesondere eine Aufweitung des Angussspaltes, welcher auf unterschiedliche Weise realisiert ist und einem verbesserten Einströmverhaltens des Gießharzes bei der Befüllung mit einer Befüllungsvorrichtung 2 dient. Vorteilhafterweise führt die Aufweitung 5 (5a, 5b, 5c) des Angussspaltes zu einer geringeren Neigung von Verwirbelung bei der Befüllung des Hohlraums 12 des Gießpaktes 1 mit einem Gießharz, wodurch das Auftreten von Schlierenbildung und Gaseinschlüssen vermeidet wird. In Fig. 3a ist eine Ausführungsform schematisch dargestellt, bei der eine Aufweitung 5a des Angusspaltes dadurch erreicht wird, dass die Formschale eine Facettierung, zumindest im Bereich der Einlassöffnung 16, aufweist. In Fig. 3b ist eine weitere Ausführungsform schematisch dargestellt, bei der die Aufweitung 5b des Angussspaltes durch eine Facettierung des Grundkörpers, zumindest im Bereich der Einlassöffnung 16, erreicht wird. Fig. 3c zeigt eine kombinierte Ausführungsform, bei der eine Aufweitung 5c des Angussspaltes durch eine Facettierung von sowohl Formschale als auch Grundkörper, zumindest im Bereich der Einlassöffnung 16, realisiert wurde. Wie bereits erläutert, kann die Aufweitung 5 in einer nicht dargestellten Abwandlung anders ausgeformt sein, sich in einer besonders bevorzugten Abwandlung über den ganzen Umfang bzw. 360° erstrecken. Neben dem verbesserten Einströmen des Gießharzes wird durch die Aufweitung des Angussspaltes auch das Anbringen von Einflußöffnungen großen Durchmessers erleichtert. In Kombination mit der abdichtenden Befüllvorrichtung 2 können so insbesondere auch bei höherviskosen Gießharzen hohe Volumenströme erreicht werden.

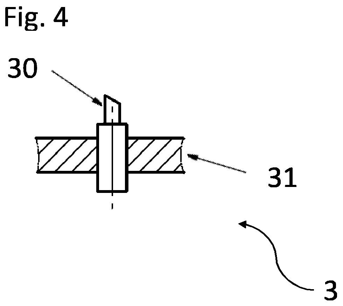

Fig. 4 zeigt eine Ausführungsform einer Öffnungsvorrichtung 3 zum Ausbilden von Öffnungen (16, 17) in einem Dichtungsband 13 eines Gießpaketes 1. Die Öffnungsvorrichtung weist ein Element 30, geeignet zum Ausbilden einer Öffnung (16, 17) auf. Bevorzugt kann darunter ein mechanisches Bauteil mit einer spitzen bzw. scharfkantigen Umrandung bzw. Form verstanden werden, welches geeignet ist eine Öffnung (16, 17) in ein Dichtungsband 13 eines Gießpaketes 1 auszubilden, worunter bevorzugt schneiden bzw. stanzen bzw. lochen verstanden wird. In einer bevorzugten Ausführungsform ist das Element 30 eine scharfe Messerklinge, mit welcher eine Öffnung (16, 17) in ein Dichtungsband 13 einer Gießform 1 geschnitten werden kann. Alternativ kann das Element 30 zum Ausbilden einer Öffnung (16, 17) auch ein Element mit einer erwärmten bzw. erhitzen Oberfläche sein, welches durch unmittelbares Anordnen bzw. Berühren an einem Dichtungsband 13 eines Gießpaktes 1 zu einer thermischen Erwärmung bzw. thermischen Zersetzung des Dichtungsband 13 an der Berührungsstelle führt, wodurch eine Öffnung (16, 17) ausgebildet wird. Alternativ kann das Element 30 auch eine Strahlungsquelle, insbesondere eine Quelle für gepulste Laserstrahlung sein, mit welcher durch Applizieren eines bzw. mehrerer Laserpulse eine thermische Erwärmung bzw. thermische Zersetzung eines Dichtungsbandes 13 an einer Berührungsstelle zur Ausbildung einer Öffnung (16, 17) führt. Vorteilhafterweise muss bei einer Laserquelle als bevorzugtem Element 30 zum Ausbilden einer Öffnung die Öffnungsvorrichtung 3 nicht in direkten bzw. unmittelbaren Kontakt mit einem Dichtungsband 13 eines Gießpaketes 1 gebracht werden, sondern kann in einem Abstand hierzu positioniert werden. Die Öffnungsvorrichtung 3 kann zusätzlich ein Element 31 zur mechanischen Führung aufweisen, mit welchem die Öffnungsvorrichtung 3 mittels eines Roboterarms als bevorzugtem, mechanischen Führungsmittel, insbesondere durch Verbinden des Roboterarms mit der mechanischen Führung 31 der Öffnungsvorrichtung 3, die Öffnungsvorrichtung 3 präzise an die Einlassöffnung 16 angeordnet werden kann.

Durch die robotisch geführte mechanische Führung 23 kann das Formteil 20 vorteilhaft mit einem definierten, einstellbaren bzw. eingestellten Anpressdruck gegen das Gießpaket gepresst werden. Zusätzlich oder alternativ kann auch eine Federung vorgesehen sein, die das Formteil gegen das Gießpaket und/oder das Gießpaket gegen das Formteil presst, entsprechend kann das in Fig. 1 angedeutete Element 23 auch eine solche (Teil)Federung darstellen bzw. aufweisen. Die mechanische Führung 23 kann auch eine Fixierung des Formteils 20 relativ zum in der Halteeinrichtung angeordneten Gießpaket aufweisen, insbesondere sein, wobei der Anpressdruck vorzugsweise durch Kompression des entsprechend elastischen Formteils 20 und/oder einer Federung aufgeprägt werden kann.

Die vorstehend erläuterten Ausführungsformen bzw. -beispiele offenbaren einen erfindungsgemäßen Befüllprozeß zum Anguss einer dünnen photochromen Schicht auf einem Kunststoffgrundglas 10, der vorteilhaft eine Befüllung des Gießpaketes ohne Undichtigkeiten und unkontrollierten Austritt von Gießharzen erlaubt.

Dafür wird ein(e) auf den Rand des Gießpaketes 1, bestehend aus vorderer Gießform 11, Kunststoffgrundglas 10 und umlaufendem Dichtungsband bzw. Tape 13, aufliegende(s) Befüllvorrichtung bzw. -system 2 bereitgestellt. Diese(s) Befüllvorrichtung bzw. -system umfasst ein elastisches, auf dem Dichtungsband 13 aufliegendes Formteil 20, welches eine hohe chemische Beständigkeit gegenüber dem verwendeten Gießharz aufweist, eine Zuführung bzw. -leitung 21 des Gießharzes, eine Druckvorrichtung 22 und eine mechanischen Führung 23 zum Verstellen bzw. Anpressen des Formteiles.

Für die Erzeugung einer Einfüllöffnung im Dichtungsband wird eine Apparatur bzw. Öffnungsvorrichtung 3 bereitgestellt, umfassend ein Werkzeug 30, welches eine Öffnung definierter Größe in das Dichtungsbandmaterial schneidet und dabei nicht die Formschale und das Grundglas verletzt, oder in einem anderen Beispiel die Einfüllöffnung durch thermische Zersetzung des Dichtungsbandmaterials herbeiführt. Weiterhin weist die Apparatur eine mechanische Vorrichtung 31 auf, die die Einfüllöffnung so positioniert, dass sie nachfolgend vom dichtenden Formteil 20 des Befüllsystems umschlossen wird. Die so erzeugte Öffnung großen Durchmessers ermöglicht eine Befüllung mit optimiertem Querschnitt.

Zur Verbesserung des Einströmverhaltens des Gießharzes zur Vermeidung von Gießschlieren und Gaseinschlüssen erfolgt neben der Verwendung des Befüllsystems 2 eine Anpassung der Formschale und/oder des Grundkörpers des Gießpaketes auf die Prozeßanforderungen und die Positionierung des angepaßten Gießpaketes in Bezug auf die Einfüllöffnung und das elastische Formteil. Bei angepreßtem Formteil befindet sich hinter der Einfüllöffnung eine Aufweitung 5 des Angußspaltes, die in ihrer Formgebung so gestaltet ist, dass ein verwirbelungsarmes Einströmen des Gießharzes erreicht werden kann. Die Ausführung der Aussparungen kann in verschiedenen Geometrien erfolgen, die obengenannte Anforderung erfüllen: eine mögliche, nicht-einschränkende erfindungsgemäße Ausführung ist beispielsweise eine Fase am Rand des Gießpaktes. Die Aufweitung 5 des Angußspaltes kann vorteilhaft durch eine Aussparung in der vorderseitigen Gießform 5a, besonders vorteilhaft eine lineare Rücknahme der hohlraumbegrenzenden Oberfläche der vorderseitigen Gießform, eine Aussparung im Grundglas 5b, vorzugsweise eine lineare Rücknahme der hohlraumbegrenzenden Oberfläche des Grundglases, oder durch gegenüberliegende Aussparungen in Gießform und Grundglas 5c, vorteilhafterweise lineare Rücknahmen der einander gegenüberliegenden hohlraumbegrenzenden Oberflächen, bereitgestellt werden. Die Aufweitung des Angußspaltes wird wenigstens im Bereich der Einfüllöffnung bereitgestellt, ist aber nicht auf dieses Randsegment beschränkt. Wie bereits erwähnt, ist in einer weiteren, nicht dargestellten, Ausführung die Aufweitung des Angußspaltes, insbesondere die Aussparung 5a, 5b bzw. 5c, umlaufend. Die radiale Ausdehnung der Aufweitung beträgt vorzugsweise wenige mm, um Materialverlust zu vermeiden.

Die Befüllung kann in verschiedenen Gießpaketlagen erfolgen, bevorzugt wird sie in gekippter oder aufrechter Lage an dem der Einfüllöffnung zugewandten unteren Kreisbogensegment durchgeführt. Wenigstens eine Öffnung im Dichtungsband zum Druckausgleich beim Befüllen wird an einer gegenüberliegenden Position bereitgestellt.

Ein erfindungsgemäßer Befüllprozeß wird in einer Ausführung folgendermaßen durchgeführt: Es wird ein Gießpaket mit optimierter Geometrie der Bauteile (5a / 5b / 5c) und einem geringen Spaltmaß bereitgestellt. Das Gießpaket wird wie beschrieben positioniert und von der Apparatur mit dem Öffnungs-Werkzeug 30 am Dichtungsband perforiert. Die Einfüllöffnung umschließend drückt das elastische Formteil 20 auf das Dichtungsband. Unter Druck wird das photochrome Acrylat- oder (Thio)-Urethangießharz in kurzer Dauer über den aufgeweiteten Kreisring oder Kreisringabschnitt des Gießpaketes eingegeben. Nach vollständiger Befüllung werden die Druckausgleichsöffnungen und dann die Einfüllöffnung verschlossen. Das Gießpaket kann entnommen werden und der thermischen oder photochemischen Härtung zugeführt werden. Nach Aushärtung des photochromen Angußes wird die obere Formschale entfernt und in einem Folgeschritt das so hergestellte Produkt nach Bedarf auf den gewünschten Durchmesser bearbeitet. Man erhält so ein erfindungsgemäßes roh-rundes Brillenglas in sehr guter kosmetischer Qualität mit den gewünschten photochromen Eigenschaften in einem schnellen Fertigungsprozeß.

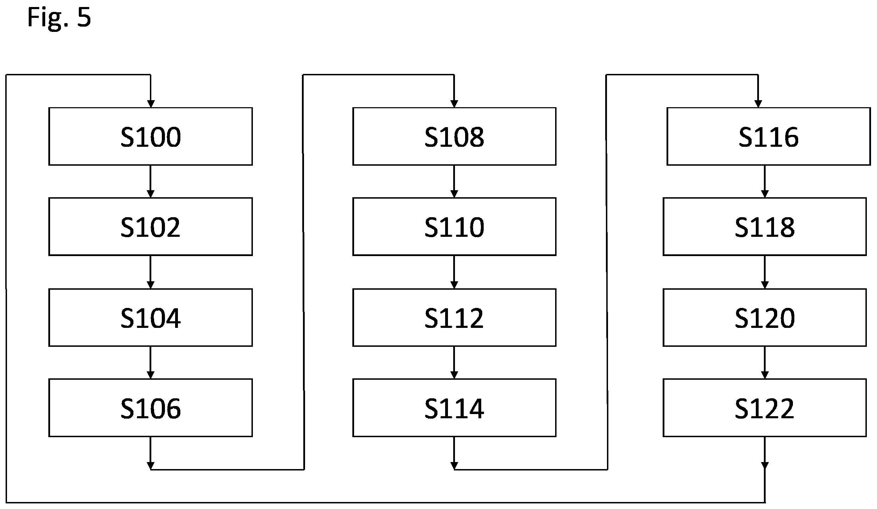

Fig. 5 zeigt ein Verfahren nach einer Ausführungsform der vorliegenden Erfindung mit den Schritten:

| | |
|---|---|
| S100: | Bereitstellen eines Grundkörpers, |
| S102: | Bereitstellen einer Formschale, |
| S104: | Anordnen von Grund- bzw. Glaskörper und Formschale derart, dass zwischen Grund- bzw. Glaskörper und Formschale ein Hohlraum ausgebildet ist, |
| S106: | Anbringen eines Dichtungsbandes erzeugend eine Abdichtung des zwischen Grund- bzw. Glaskörper und Formschale gebildeten Hohlraums zum Erhalt eines Gießpaketes, |
| S108: | Ausbilden mindestens einer Öffnung in dem Dichtungsband, |
| S110: | Anordnen des Gießpakets in einer Halteeinrichtung, |
| S112: | Befüllen des Hohlraums durch die mindestens eine Öffnung mit einem Gießharz, |
| S114: | Verschließen der Öffnung, |
| S116: | Entnehmen des mit einem Gießharz befüllten Gießpaketes aus der Halteeinrichtung, |
| S118: | Aushärten des Gießpaketes, |
| S120: | Entfernen des Dichtungsbandes, und |
| S122: | Entfernen der Formschale zum Erhalt einer Linse. |

Nachfolgend werden noch konkrete Beispiele für photochrome Linsen vorgestellt, die einen Anguss aus Poly(thio)urethan-Gießharz mit hochviskosen anellierten Naphthopyranfarbstoffen aufweisen bzw. der Anguss jeweils durch Befüllen des Hohlraums des Gießpaktes durch mindestens eine Öffnung mit einem Poly(thio)urethan-Gießharz mit hochviskosen anellierten Naphthopyranfarbstoffen bzw. einem erfindungsgemäßen (Anguss)Verfahren unter Verwendung einer Abdichtung, eines Grundkörpers, einer Formschale und einer Spaltaufweitung im Bereich der (Einfüll)Öffnung durchgeführt bzw. hergestellt wurde.

Das Verfahren ist vorteilhaft insbesondere für alle thermisch oder photochemisch härtende Polymergießharze geeignet. Insbesondere kann es für Polyurethane, Polythiourethane sowie Mischformen, für thermisch und photochemisch härtbare Polyacrylate, Polymethylmethacrylaten sowie deren Mischformen und für thermisch härtbare Polycarbonate verwendet werden. Polyurethane und Polythiourethane sowie deren Mischformen werden durch Polyaddition aus entsprechenden Monomeren hergestellt. Das Stufenwachstum der Polyadditionsreaktion kann zu schneller Viskositätserhöhung nach dem Mischen des Gießharzes führen.

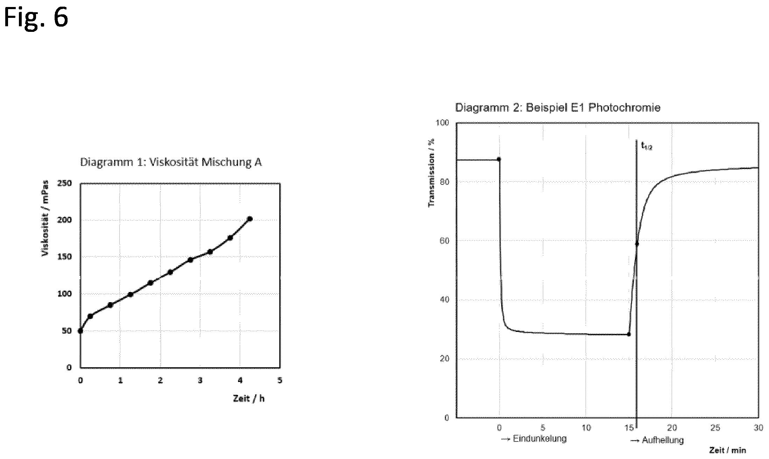

Nachfolgende Tabelle 1 und Diagramm 1 (Fig. 6) zeigen zeigt exemplarisch den Viskositätsverlauf einer Gießharzmischung A (Zusammensetzung von Beispiel E0 siehe Tabelle 2), die nach Konfektionierung und anschließender Evakuierung (3 x 10⁻¹ mbar) unter Laborbedingungen gerührt wurde. Die Viskositätsmessungen wurden von jeweils den Gießharzmischungen entnommenen Proben mit Viskosimetern bestimmt. Zum Einsatz kamen Rotavisc LO-VI (IKA) und Visconorm DD (Gel Instrumente).

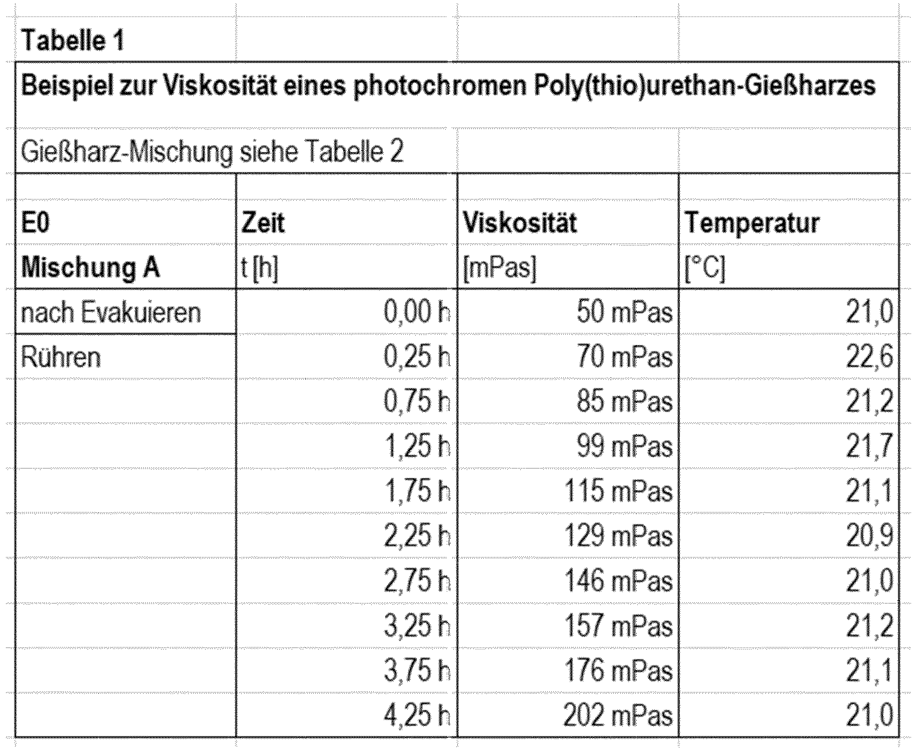

Tabelle 2 zeigt verschiedene Beispiele für einen Anguss bzw. ein Gießharz zum Befüllen des Hohlraums des Gießpaktes bei einem erfindungsgemäßen (Anguss)Verfahren bzw. einem erfindungsgemäßen Gießpaket bzw. einer erfindungsgemäß( hergestellt)en Linse:

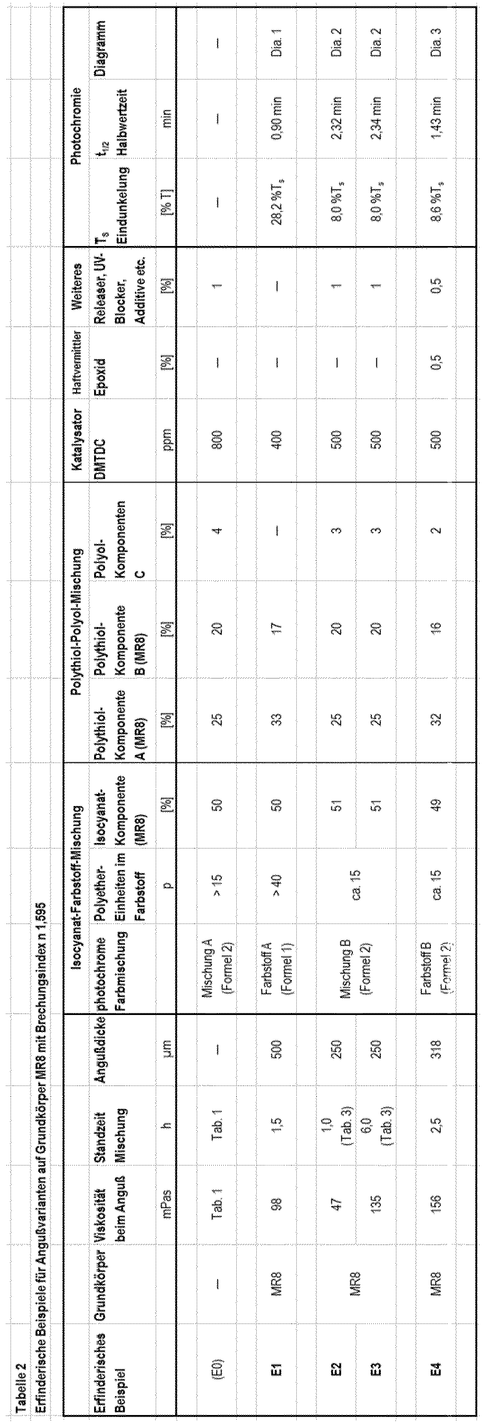

Bei den Beispielen wurden Gießharzmischungen mit MR8-Komponenten (Mitsui Chemicals) als Material für den Grundkörper MR8 gewählt, wobei Vergleichsversuche zeigten, dass auch andere Grundkörpermaterialien zu vorteilhaften Ergebnissen führen. Die in diesen und anderen Versuchsreihen hergestellten Musterlinsen wurden auf ihre photochromen Eigenschaften geprüft. Die Messung bei 23 °C erfolgt gemäß DIN EN ISO 8980-3:2022 an einem speziellen Meßaufbau ausgestattet mit Diodenarray-Spektrometern MCS 551 Vis (Carl Zeiss Spectroscopy) und Xenon-Bogenlampe LSH 201 (L.O.T.) mit 300W Xe OF Leuchtmittel (Ushio) zur Anregung. Maximale Eindunkelung τᵥ₁ nach 15 min Anregung sowie Halbwertzeit der Aufhellung von τᵥ₁ nach τᵥ₀ (nicht-angeregter Zustand) sind in Tabelle 2 aufgeführt.

In der Gießharzmischung für Beispiel E1 wurde gemäß nachfolgender Formel 1 ein anelliertes 2H-Naphthopyranen als photochromer Farbstoff A verwendet. Gemäß Formel 1 trägt der Farbstoff eine N-Morpholinyl-Gruppe als Substituenten R1 und ist über eine Bernsteinsäureester-Brücke mit einer linearen Polypropylenoxykette substituiert. Die große Länge von p > 40 Einheiten sowie die Verwendung von Polypropylenoxy-Einheiten erlauben das Einbringen in die Monomerenmischung des Thiourethangießharzes und den Erhalt guter photochromer Eigenschaften:

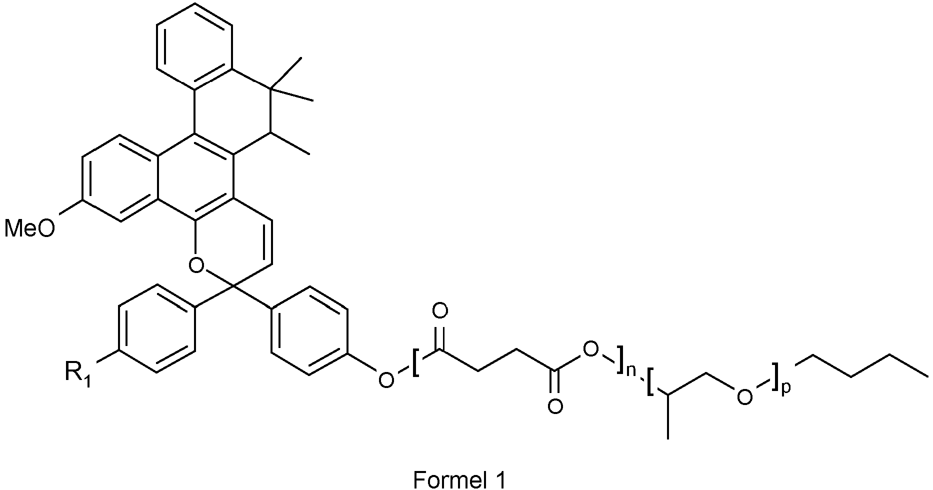

Für die Herstellung der Farbstoffmischung A für Viskositätsversuche E0 sowie für die Herstellung der Beispiele E2 (Mischung B), E3 (Mischung B) und E4 (Farbstoff B) werden jeweils Farbstoffe aus der Gruppe der Indenonaphthopyrane gemäß Formel 2 verwendet. Diese Farbstoffe sind insbesondere in WO 2019/238495 offenbart.

Die Farbstoffe tragen lineare Polypropylenoxyketten mit p ≥ 10 gemäß Formel 2. Die Reste R₁, R₂ und R₃ stellen jeweils unabhängig voneinander einen Substituenten dar, ausgewählt aus Wasserstoff, Brom, Chlor, Fluor, einem (C₁-C₆)-Alkyl-Rest, einem (C₃-C₇)-Cycloalkyl-Rest, einem (C₁-C₆)-Thioalkyl-Rest, einem (C₁-C₆)-Alkoxy-Rest, einem Hydroxy-Rest, einem tert-Butyl-dimethylsilyloxy-Rest, einem tert-Butyldiphenylsilyloxy-Rest, einem Trifluormethyl-Rest, einem Phenyl-Rest, einem Phenoxy-Rest, einem Benzyl-Rest, einem Benzyloxy-Rest, einem Biphenyl-Rest, einem Biphenyloxy-Rest, einem Naphthyl-Rest, einem Naphthoxy-Rest, einem Mono-(C₁-C₆)-alkylamino-Rest, einem Di-(C₁-C₆)-alkylamino-Rest, einem Phenylamino-Rest, einem Diphenylamino-Rest, einem Piperidinyl-Rest, einem 3,5-Dimethylpiperidinyl-Rest, einem Indolinyl-Rest, einem Morpholinyl-Rest, einem 2,6-Dimethylmorpholinyl-Rest, einem Thiomorpholinyl-Rest, einem Azacycloheptyl-Rest, einem Phenothiazinyl-Rest, einem Phenoxazinyl-Rest, einem 1,2,3,4-Tetrahydrochinolinyl-Rest, einem 1,2,3,4-Tetrahydroisochinolinyl-Rest, einem Phenazinyl-Rest, einem Carbazolyl-Rest, einem 1,2,3,4-Tetrahydrocarbazolyl-Rest oder einem 10,11-Dihydro-dibenz[b,f]azepinyl-Rest;
oder die zwei benachbarten Reste R₁ und R₂ stellen die Gruppierung -V-(CH₂)r-W-dar, wobei V und W unabhängig voneinander aus den Gruppierungen -O-, -S-, -N(C₁-C₆)-Alkyl-, -NC₆H₅-, -CH₂-,-C(CH₃)₂-, -C(C₂H₅)₂- oder -C(C₆H₅)₂- ausgewählt sind; r stellt dabei eine ganze Zahl von 1 bis 3 dar; ist dieser Zahlenwert 2 oder 3, kann an zwei benachbarten CH₂-Gruppen auch ein Benzol-Ring annelliert sein; V oder W kann zusammen mit der jeweils benachbarten CH₂-Gruppe auch einen annellierten Benzol-Ring darstellen;
und worin die Reste R₄, R₅, R₆, jeweils unabhängig voneinander einen Substituenten darstellen, ausgewählt aus Wasserstoff, einem (C₁-C₆)-Alkyl-Rest, einem (C₃-C₇)-Cycloalkyl-Rest, einem Phenyl-Rest, einem Benzyl-Rest, einem Biphenyl-Rest oder einem Naphthyl-Rest; m stellt dabei eine ganze Zahl von 1 bis 3 dar;
oder zwei benachbarte Reste R₄ bilden einen annellierten Benzol-Ring, der un-, mono- oder disubstituiert sein kann, wobei die Substituenten ausgewählt sein können aus Wasserstoff, einem (C₁-C₆)-Alkyl-Rest, einem (C₁-C₆)-Alkoxy-Rest, einem Phenyl-Rest, einem Benzyl-Rest, einem Biphenyl-Rest oder einem Naphthyl-Rest;
oder die Reste R₅ und R₆ bilden zusammen mit dem an diese Reste gebundenen Kohlenstoffatom einen drei- bis achtgliedrigen carbo- oder heteromonocyclischen Ring und an den ein bis zwei aromatische oder heteroaromatische Ringsysteme annelliert sein können, wobei das bzw. die Ringsysteme unabhängig voneinander ausgewählt sind aus Benzol, Naphthalin, Phenanthren, Pyridin, Chinolin, Furan, Thiophen, Pyrrol, Benzofuran, Benzothiophen, Indol und Carbazol.

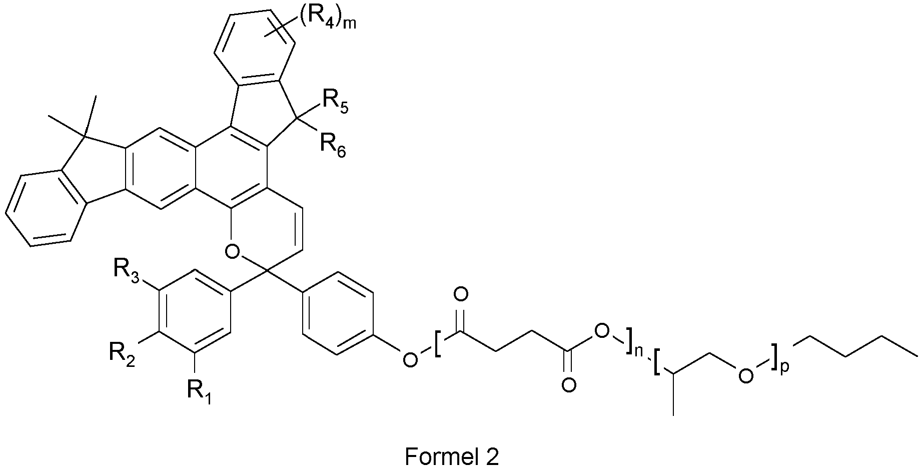

Beispiel E1 sind Linsen aus Angüssen auf Kunststoffglasgrundkörpern aus Polythiourethan. Diese werden in einem Verfahrensschritt S100 bereit-, vorzugsweise vorab hergestellt und sind aus einer Gießharzmischung mit MR8-Komponenten (Mitsui Chemicals) hergestellt. Diese weithin gebräuchlichen Mischungen führen zu optischen Kunstoffmaterial mit Brechungsindex n 1,6. Der Anguss basiert zur Vereinfachung des Indexmatchings ebenfalls auf Basis MR8-Poly(thio)urethan-Gießharz. Die Isocyanatkomponente nach Tabelle 2 wird vorgelegt und ein photochromer Farbstoff gemäß Formel 1 mit einem linearen Polypropylenoxy-Subtituenten wird beaufschlagt. Dann erfolgt bei Raumtemperatur unter Rühren die Zugabe der weiteren Komponenten zur Ausbildung des Poly(thio)urethans und des Katalysators Dibuthylzinndichlorid. Die klare Lösung wird 1 h evakuiert (3 x 10⁻¹ mbar). Nach einer Standzeit gemäß Tabelle 2 wird im Verfahrensschritt S112 das so erhaltene Gießharz in das Gießpaket gefüllt. Die Aushärtung erfolgt in einem Temperaturverlauf zwischen Raumtemperatur und 125 °C. Man erhält klare Linsen mit guten photochromen Eigenschaften.

In Diagramm 2 (vgl. Fig. 6; Diagramm 1 zeigt beispielhaft den Viskositätsverlauf der Gießharzmischung A) wird der Verlauf der Transmission eines entsprechend erzeugten Probenkörpers ohne optische Wirkung gezeigt.

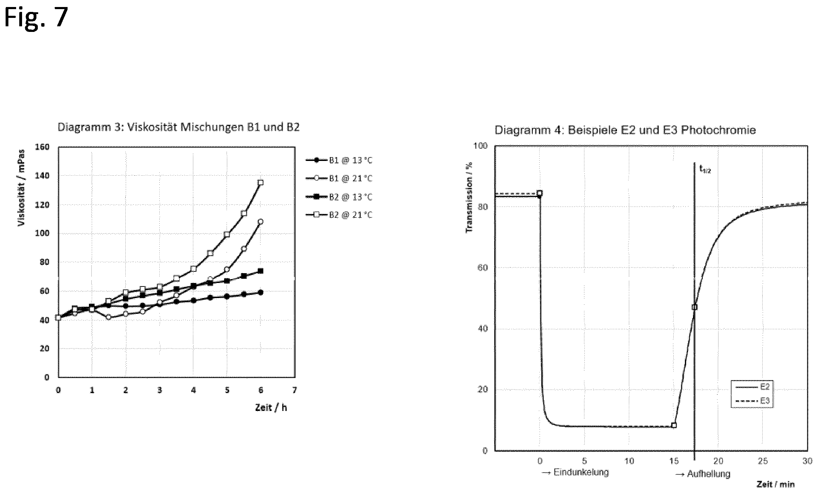

Die Beispiele E2 und E3 werden nach der gleichen Methode wie Beispiel E1 hergestellt. Diese Beispiele wurden in höheren Stückzahlen mit einer fertigungstechnischen Anlage (evakuierbarer, temperierter Rührkessel für Gießharz) erzeugt. Tabelle 3 zeigt anhand der Mischungen B1 und B2, wie oben erwähnte Parameter zu einer Viskositäterhöhung der photochromen Gießharzmischung führen: in diesem Beispiel Standzeit des Gießharzes nach dem Mischvorgang, Temperatur, Konzentration des Katalysators Dibuthylzinndichlorid. Die für Beispiele E2 und E3 verwendete Mischung B2 enthält 500 ppm Katalysator, unterschiedliche Polythiole, Polyole und die Farbstoffmischung B aus Farbstoffen der Formel 2 (siehe Tabelle 2). Beispiele E2 und E3 zeigen die Herstellung von Mustern bei geringer und hoher Standzeit im umgewälzten Gießharzreservoir einer erfindungsgemäßen (Befüll)Vorrichtung. Während Beispiel E2 aufgrund der niedrigen Viskosität einfach herzustellen war, sind die Anforderungen für E3 nach mehrstündiger Gießharzstandzeit erheblich höher (vgl. Tabelle 3, Diagramm 3, Fig. 7).

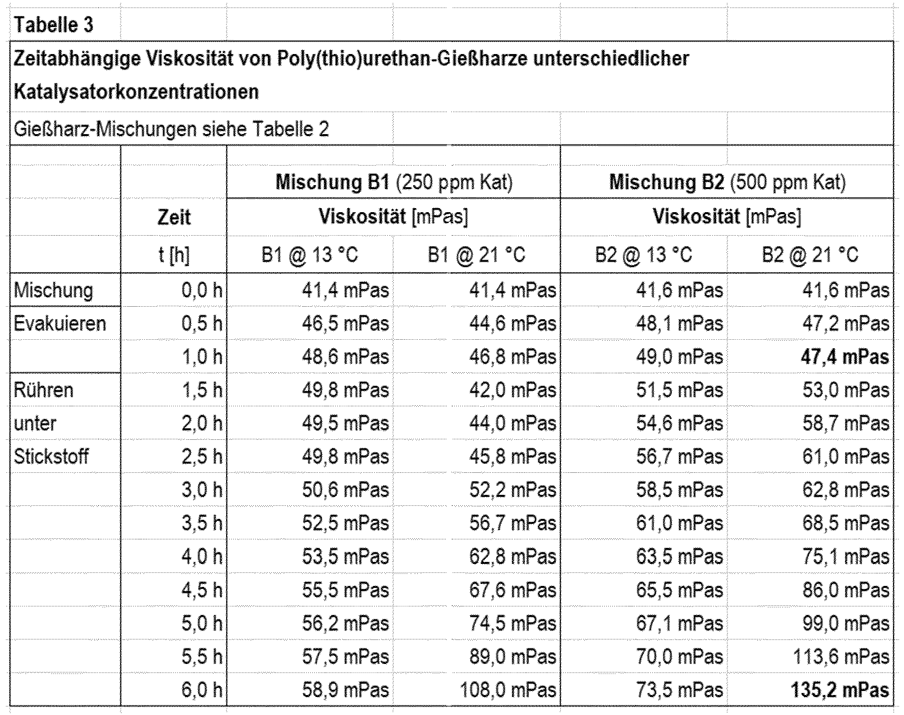

Diagramm 3 (vgl. Fig. 7) zeigt den Verlauf der Viskosität der Gießharzmischungen B1 und B2 mit unterschiedlichen Katalysatorkonzentrationen bei zwei Temperaturen und verdeutlicht die Vorteile des erfinderischen Verfahrens für eine Serienfertigung bei längeren Standzeiten des Gießharzes bei hohen Stückzahlen und höheren Temperaturen.

Das Gießharz für Beispiel E2 hat eine relativ niedrige Viskosität, das für E3 eine lange Standzeit mit entsprechend höherer Viskosität. Man erhält in beiden Fällen klare Linsen hoher Qualität mit guten photochromen Eigenschaften. Vorteilhaft für eine Serienfertigung ist, dass die photochromen Eigenschaften unabhängig von der Standzeit des Gießharzes sind (siehe Diagramm 4 in Fig. 7, Messung wie für Beispiel E1 beschrieben). Sowohl Gießharzstandzeit als auch Temperatur im Gießharzreservoir zeigten keinen signifikanten Einfluß auf die photochromen Eigenschaften, wie auch aus Tabelle 2 abzulesen ist (vgl. Transmission im eingedunkelten Zustand Tₛ; Halbwertzeit der Aufhellung; Diagramm 4, Fig. 7). Mit einem erfindungsgemäßen (Anguß)Verfahren kann vorteilhafterweise eine reproduzierbare Fertigung und sicherer Paarbarkeit der photochromen Produkte gewährleistet werden.

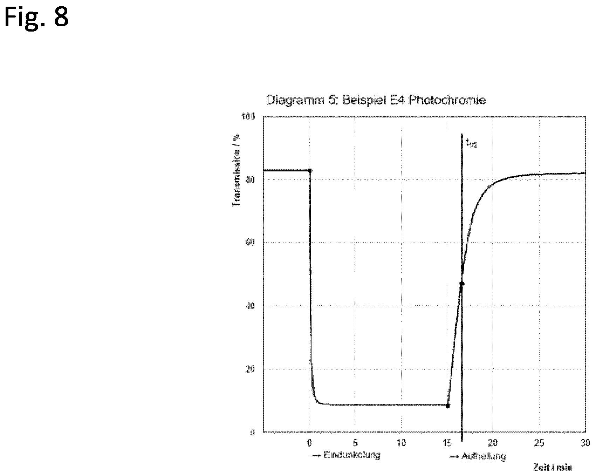

Beispiel E4 wird nach der gleichen Methode wie Beispiel E1 hergestellt. Das Gießharz enthält 500 ppm Katalysator, unterschiedliche Polythiole, Polyole, den Einzelfarbstoff B gemäß der Formel 2 und als haftvermittelndes Additiv ein Epoxid (siehe Tabelle 2). Man erhält klare Linsen mit photochromen Eigenschaften. In Diagramm 5 (vgl. Fig. 8) wird der Verlauf der Transmission eines nach dem Angußverfahren erzeugten Probenkörpers ohne optische Wirkung gezeigt. Maximale Eindunkelung τᵥ₁ nach 15 min Anregung sowie Halbwertzeit der Aufhellung von τᵥ₁ nach τᵥ₀ (nicht-angeregter Zustand) sind in Tabelle 2 aufgeführt.

In der vorliegenden Offenbarung impliziert "weist ein X auf" allgemein keine abschließende Aufzählung, sondern ist eine Kurzform von "weist wenigstens ein X auf" und umfasst auch "weist zwei oder mehr X auf" sowie "weist außer X auch Y auf". Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Gießpaket
- 2: Befüllvorrichtung
- 3: Öffnungsvorrichtung
- 5: Aufweitung
- 5a: Aufweitung in Formschale
- 5b: Aufweitung in Grundkörper
- 5c: Aufweitung in Formschale und Grundkörper
- 10: Grundkörper
- 11: Formschale
- 12: Hohlraum
- 13: Dichtungsband bzw. Tape
- 16: Einlassöffnung
- 17: Auslassöffnung
- 20: Aufliegendes Formteil
- 21: Gießharz-Zuleitung
- 22: Druckvorrichtung
- 23: mechanische Führung
- 24: Gießharzreservoir
- 30: Element zum Ausbilden einer Öffnung
- 31: mechanische Vorrichtung

## Patentansprüche

1. Verfahren zur Herstellung einer Linse, insbesondere eines Brillenglases, umfassend zumindest die folgenden Schritte:
| | |
|---|---|
| - S100: | Bereitstellen eines Grundkörpers (10), |
| - S102: | Bereitstellen einer Formschale (11), |
| - S104: | Anordnen von Grundkörper (10) und Formschale (11) derart, dass zwischen Grundkörper (10) und Formschale (11) ein Hohlraum (12) ausgebildet ist, |
| - S106: | Anbringen eines Dichtungsbandes (13) erzeugend eine Abdichtung des zwischen Grundkörper (10) und Formschale (11) gebildeten Hohlraums (12) zum Erhalt eines Gießpaketes (1), |
| - S112: | Befüllen des Hohlraums (12) durch die mindestens eine Öffnung (16, 17) mit einem Gießharz, |
| - S120: | Entfernen des Dichtungsbandes (13), und |
| - S122: | Entfernen der Formschale (11) zum Erhalt der Linse, |
**dadurch gekennzeichnet, dass**
- das Befüllen des Hohlraums (12) ein Befüllen des Hohlraums mit dem Gießharz aus einem Gießharzreservoir (24) durch eine Zuleitung (21), ein abdichtendes Formteil (20), das wenigstens eine elastische Schicht zum Aufliegen an dem Gießpaket (1) aufweist und wenigstens während des Befüllens an dem Gießpaket (1) aufliegt, und die mindestens eine Öffnung (16, 17) umfasst, und
- abdichtendes Formteil (20) und Gießpaket (1) gegeneinander gepresst werden, und
- ein Spaltmaß des Hohlraums (12) kleiner als eintausend Mikrometer ist.

2. Verfahren nach Anspruch 1, **dadurch gekennzeichnet, dass** das Befüllen des Hohlraums (12) unter Überdruck und/oder zumindest teilweise entgegen der Gravitationsrichtung erfolgt.

3. Verfahren nach Anspruch 1 oder 2 aufweisend zumindest einen der folgenden Schritte:
| | |
|---|---|
| - S108: | Ausbilden mindestens einer Öffnung (16, 17) in dem Dichtungsband (13), |
| - S110: | Anordnen des Gießpakets (1) in einer Halteeinrichtung, |
| - S114: | Verschließen der Öffnung (16, 17), |
| - S116: | Entnehmen des mit einem Gießharz befüllten Gießpaketes (1) aus der Halteeinrichtung, |
| - S118: | Aushärten des Gießpaketes (1). |

4. Verfahren nach einem der vorhergehenden Ansprüche, **dadurch gekennzeichnet, dass** abdichtendes Formteil (20) und Gießpaket (1) mittels einer Anpressvorrichtung gegeneinander gepresst werden.

5. Verfahren nach einem der vorhergehenden Ansprüche, **dadurch gekennzeichnet, dass** das Ausbilden mindestens einer Öffnung (16, 17) in dem Dichtungsband (13) nach dem Anbringen des Dichtungsbandes (13) und/oder mittels einer Öffnungsvorrichtung (3), insbesondere mechanisch und/oder thermisch und/oder mittels Laserlicht, erfolgt.

6. Verfahren nach einem der Ansprüche 2-5, **gekennzeichnet durch** ein Verstellen des abdichtenden Formteils (20) und/oder der Öffnungsvorrichtung (3) relativ zu dem in der Halteeinrichtung angeordneten Gießpaket (1) mittels einer mechanischen Führung (23).

7. Verfahren nach einem der vorhergehenden Ansprüche, **dadurch gekennzeichnet, dass** in dem Dichtungsband (13) mindestens zwei Öffnungen (16, 17) ausgebildet sind, wobei der Hohlraum (12) durch eine erste (16) dieser Öffnungen (16, 17) mit dem Gießharz befüllt wird, wobei der Hohlraum (12) auch durch wenigstens eine zweite (17) dieser Öffnungen (16, 17) mit dem Gießharz befüllt wird und/oder beim Befüllen Gas aus dem Hohlraum (12) durch wenigstens eine zweite (17) dieser Öffnungen (16, 17) entweicht.

8. Verfahren nach einem der vorhergehenden Ansprüche, **dadurch gekennzeichnet, dass** das Gießharz eine photochrome Beschichtung bildet.

9. Verfahren nach einem der vorhergehenden Ansprüche, **dadurch gekennzeichnet, dass** der gebildete Hohlraum (12) in einem Bereich um die mindestens eine Öffnung (16, 17) eine Spaltaufweitung (5, 5a, 5b, 5c) aufweist.

10. Verfahren nach Anspruch 9, **dadurch gekennzeichnet, dass** die Formschale (11) und/oder der Grundkörper (10) zumindest in einem Abschnitt der Spaltaufweitung (5, 5a, 5b, 5c) eine stetige, insbesondere lineare, Rücknahme der hohlraumbegrenzenden Oberfläche aufweist und/oder die Spaltaufweitung (5, 5a, 5b, 5c) sich über den ganzen Umfang des Hohlraums erstreckt und/oder bei der erhaltenen Linse zumindest ein die Spaltaufweitung (5, 5a, 5b, 5c) begrenzender Grundkörperrand entfernt wird.

11. Verfahren nach einem der vorhergehenden Ansprüche, **dadurch gekennzeichnet, dass** das Dichtungsband (13) ein Trägermaterial und/oder einen Klebstoff aufweist.

12. Verfahren nach einem der vorhergehenden Ansprüche, **dadurch gekennzeichnet, dass** das Aushärten des Gießpaketes (1) ein thermisches und/oder photochemisches Aushärten des Gießpaketes umfasst und/oder dass wenigstens ein Verfahrensparameter in Abhängigkeit von einer Viskosität des Gießharzes eingestellt wird und/oder das Gießharz beim Befüllen und/oder im nicht-ausgehärteten Zustand eine Viskosität von bis zu 800 mPas aufweist und/oder Eines oder Mehrere oder eine Kombination von Zwei oder Mehr der Folgenden aufweist: insbesondere thermisch härtbare, Polyurethan- und Polythiourethan-Gießharze, Polyacrylat- und Polymethylmethacrylat -Gießharze insbesondere thermisch und/oder photochemisch härtbare Polyacrylat- und Polymethylmethacrylat -Gießharze, Polycarbonat- und Polydiethylenglycol-bis(allylcarbonat)-Gießharze, insbesondere thermisch härtbare Polycarbonat- und Polydiethylenglycol-bis(allylcarbonat)-Gießharze, multifunktionale Isocyanate, Isothiocyanate und/oder Episulfide, multifunktionale Alkohole und/oder Thiole, multi- und/oder monofunktionale Acrylate und/oder Methylmethacrylate, multi- und/oder monofunktionale Allylcarbonate und/oder Diethylenglycol-bis(allylcarbonate.

13. Vorrichtung zur Durchführung eines Verfahrens nach einem der vorhergehenden Ansprüche, umfassend die folgenden Vorrichtungen:
- Mittel zum Bereitstellen des Grundkörpers (10),
- Mittel zum Bereitstellen der Formschale (11),
- Mittel zum Anbringen des Dichtungsbandes (13) erzeugend die Abdichtung des zwischen Grundkörper (10) und Formschale (11) gebildeten Hohlraums (12) zum Erhalt des Gießpaketes (1),
- die Halteeinrichtung zum Anordnen und Entnehmen des Gießpakets (1),
- das Gießharzreservoir (24), die Zuleitung (21) und das abdichtende Formteil (20) zum Befüllen des Hohlraums (12) durch die mindestens eine Öffnung (16, 17) mit dem Gießharz, wobei das Formteil (20) wenigstens eine elastische Schicht zum Aufliegen an dem Gießpaket (1) aufweist, und
- die Anpressvorrichtung zum Pressen des Formteils und Gießpakets gegeneinander.

14. Vorrichtung nach Anspruch 13, wobei die Vorrichtung zusätzlich aufweist:
- die Öffnungsvorrichtung (3) zum Ausbilden der mindestens einen Öffnung (16, 17) in dem Dichtungsband (13), und/oder
- eine Vorrichtung zum Verschließen der mindestens einen Öffnung (16, 17), und/oder
- eine Aushärtevorrichtung zum Aushärten des Gießpaketes (1).

## Claims

1. A method for manufacturing a lens, in particular a spectacle lens, comprising at least the following steps:
| | |
|---|---|
| - S100: | Obtaining a base body (10), |
| - S102: | Obtaining a mold shell (11), |
| - S104: | Arranging the base body (10) and the mold shell (11) such that a cavity (12) is formed between the base body and the mold shell, |
| - S106: | Applying a sealing tape (13) to thereby seal the cavity (12) formed between the base body (10) and the mold shell (11) to obtain a casting package (1), |
| - S112: | Filling the cavity (12) through at least one opening (16, 17) with a casting resin, |
| - S120: | Removing the sealing tape (13), and |
| - S122: | Removing the mold shell (11) to obtain the lens, |
**characterized in that**
- filling the cavity (12) comprises filling the cavity with the casting resin from a casting resin reservoir (24) through a supply line (21), a sealing part (20) that comprises at least one elastic layer adapted for resting on the casting package (1) at least during the filling, and comprises at least one opening (16, 17), and
- the sealing part (20) and the casting package (1) are pressed against each other, and
- a gap dimension of the cavity (12) is less than one thousand micrometers.

2. A method according to claim 1, **characterized in that** the cavity (12) is filled under excess pressure and/or at least partially against the direction of gravity.

3. A method according to claim 1 or 2, comprising at least one of the following steps:
| | |
|---|---|
| - S108: | Forming at least one opening (16, 17) in the sealing tape (13), |
| - S110: | Arranging the casting package (1) in a holding device, |
| - S114: | Closing the opening (16, 17), |
| - S116: | Removing the casting package (1), filled with a casting resin, from the holding device, |
| - S118: | Curing the casting package (1). |

4. A method according to one of the preceding claims, **characterized in that** the sealing part (20) and the casting package (1) are pressed against each other by means of a pressing device.

5. A method according to any of the preceding claims, **characterized in that** the formation of at least one opening (16, 17) in the sealing tape (13) takes place after the sealing tape (13) has been applied and/or by means of an opening device (3), in particular mechanically and/or thermally and/or by means of laser light.

6. A method according to any one of claims 2-5, **characterized by** adjusting the sealing mold part (20) and/or the opening device (3) relative to the casting package (1) arranged in the holding device by means of a mechanical guide (23).

7. A method according to any of the preceding claims, **characterized in that** at least two openings (16, 17) are formed in the sealing tape (13), wherein the cavity (12) is filled with the casting resin through a first (16) of these openings (16, 17), wherein the cavity (12) is also filled with the casting resin through at least a second (17) of these openings (16, 17) and/or, during filling, gas escapes from the cavity (12) through at least a second (17) of these openings (16, 17).

8. A method according to any of the preceding claims, **characterized in that** the casting resin forms a photochromic coating.

9. A method according to any of the preceding claims, **characterized in that** the formed cavity (12) has a gap widening (5, 5a, 5b, 5c) in a region around the at least one opening (16, 17).

10. A method according to claim 9, **characterized in that** the mold shell (11) and/or the base body (10) comprises, at least in a section of the gap widening (5, 5a, 5b, 5c) a continuous, in particular linear, tapering of the cavity-bounding surface and/or the gap widening (5, 5a, 5b, 5c) extends over the entire circumference of the cavity and/or, in the resulting lens, at least one base body edge delimiting the gap widening (5, 5a, 5b, 5c) is removed.

11. A method according to any of the preceding claims, **characterized in that** the sealing tape (13) comprises a carrier material and/or an adhesive.

12. A method according to any of the preceding claims, **characterized in that** the curing of the casting package (1) comprises thermal and/or photochemical curing of the casting package and/or that at least one process parameter is adjusted as a function of the viscosity of the casting resin and/or that the casting resin has a viscosity of up to 800 mPas during filling and/or in the uncured state and/or comprises one or more or a combination of two or more of the following: in particular thermally curable, polyurethane and polythiourethane casting resins, polyacrylate and polymethyl methacrylate casting resins, in particular thermally and/or photochemically curable polyacrylate and polymethyl methacrylate casting resins, polycarbonate and polydiethylene glycol bis(allyl carbonate) casting resins, in particular thermosetting polycarbonate and polydiethylene glycol bis(allyl carbonate) casting resins, multifunctional isocyanates, isothiocyanates and/or episulfides, multifunctional alcohols and/or thiols, multi- and/or monofunctional acrylates and/or methyl methacrylates, multi- and/or monofunctional allyl carbonates and/or diethylene glycol bis(allyl carbonates).

13. Apparatus for carrying out a process according to any of the preceding claims, comprising the following devices:
- means for providing the base body (10),
- means for providing the mold shell (11),
- means for attaching the sealing tape (13) to seal the cavity (12) formed between the base body (10) and the mold shell (11) to obtain a casting package (1),
- the holding device for positioning and removing the casting package (1),
- the casting resin reservoir (24), the supply line (21) and the sealing part (20) for filling the cavity (12) through the at least one opening (16, 17) with the casting resin, wherein the sealing part (20) comprises at least one elastic layer adapted for resting against the casting package (1), and
- the pressure-applying device for pressing the sealing part (20) and the casting package (1) against each other.

14. Apparatus according to claim 13, wherein the apparatus further comprises:
- the opening device (3) for forming the at least one opening (16, 17) in the sealing tape (13), and/or
- a device for closing the at least one opening (16, 17), and/or
- a curing device for curing the casting package (1).

## Revendications

1. Procédé de fabrication d'une lentille, notamment d'une lentille de lunettes, comprenant au moins les étapes suivantes :
| | |
|---|---|
| - S100 : | Obtention d'un corps de base (10), |
| - S102 : | Obtention d'une coque de moule (11), |
| - S104 : | Disposition du corps de base (10) et de la coque du moule (11) de manière à former une cavité (12) entre le corps de base (10) et la coque du moule (11), |
| - S106: | Application d'un ruban d'étanchéité (13) pour sceller la cavité (12) formée entre le corps de base (10) et la coque du moule (11) afin d'obtenir un ensemble de moulage (1), |
| - S112 : | Remplissage de la cavité (12) par au moins une ouverture (16, 17) avec une résine de coulée, |
| - S120 : | Retrait du ruban d'étanchéité (13), et |
| - S122 : | Procédé d'élimination de la coque du moule (11) pour obtenir la lentille, |
**caractérisé en ce que**
- le remplissage de la cavité (12) comprend le remplissage de la cavité avec la résine de coulée provenant d'un réservoir de résine de coulée (24) par l'intermédiaire d'une conduite d'alimentation (21), une partie d'étanchéité (20) comprenant au moins une couche élastique adaptée pour reposer sur le moule de coulée (1) au moins pendant le remplissage, et comprenant au moins une ouverture (16, 17), et
- la partie d'étanchéité (20) et le bloc de moulage (1) sont pressés l'un contre l'autre, et
- la dimension de l'espace de la cavité (12) est inférieure à mille micromètres.

2. Procédé selon la revendication 1, **caractérisé en ce que** la cavité (12) est remplie sous une pression excessive et/ou au moins partiellement à l'encontre de la direction de la gravité.

3. Procédé selon la revendication 1 ou 2, comprenant au moins une des étapes suivantes :
| | |
|---|---|
| - S108 : | Formation d'au moins une ouverture (16, 17) dans le ruban d'étanchéité (13), |
| - S110 : | Disposition de l'emballage de coulée (1) dans un dispositif de maintien, |
| - S114 : | Fermeture de I'ouverture (16, 17), |
| - S116 : | Retrait de l'emballage de coulée (1), rempli de résine de coulée, du dispositif de maintien, |
| - S118 : | Durcissement de l'emballage de coulée (1) . |

4. Procédé selon l'une des revendications précédentes, **caractérisé en ce que** la partie d'étanchéité (20) et l'emballage de moulage (1) sont pressés l'un contre l'autre au moyen d'un dispositif de pression.

5. Procédé selon l'une quelconque des revendications précédentes, **caractérisé en ce que** la formation d'au moins une ouverture (16, 17) dans le ruban d'étanchéité (13) a lieu après que le ruban d'étanchéité (13) a été appliqué et/ou au moyen d'un dispositif d'ouverture (3), notamment mécaniquement et/ou thermiquement et/ou au moyen de lumière laser.

6. Procédé selon l'une quelconque des revendications 2 à 5, **caractérisé par** le réglage de la partie du moule d'étanchéité (20) et/ou du dispositif d'ouverture (3) par rapport à l'ensemble de coulée (1) disposé dans le dispositif de maintien au moyen d'un guide mécanique (23).

7. Procédé selon l'une quelconque des revendications précédentes, **caractérisé en ce qu'**au moins deux ouvertures (16, 17) sont formées dans le ruban d'étanchéité (13), dans lequel la cavité (12) est remplie de résine de coulée par une première (16) de ces ouvertures (16, 17), dans lequel la cavité (12) est également remplie de résine de coulée par au moins une seconde (17) de ces ouvertures (16, 17) et/ou, pendant le remplissage, du gaz s'échappe de la cavité (12) par au moins une seconde (17) de ces ouvertures (16, 17).

8. Procédé selon l'une quelconque des revendications précédentes, **caractérisé en ce que** la résine de coulée forme un revêtement photochromique.

9. Procédé selon l'une quelconque des revendications précédentes, **caractérisé en ce que** la cavité formée (12) présente un élargissement de l'espace (5, 5a, 5b, 5c) dans une région autour d'au moins une ouverture (16, 17).

10. Procédé selon la revendication 9, **caractérisé en ce que** la coque du moule (11) et/ou le corps de base (10) comprennent, au moins dans une section de l'élargissement de l'espace (5, 5a, 5b, 5c), un amincissement continu, notamment linéaire, de la surface délimitant la cavité et/ou l'élargissement de l'espace (5, 5a, 5b, 5c) s'étend sur toute la circonférence de la cavité et/ou, dans la lentille résultante, au moins un bord du corps de base délimitant l'élargissement de l'espace (5, 5a, 5b, 5c) est supprimé.

11. Procédé selon l'une quelconque des revendications précédentes, **caractérisé en ce que** le ruban d'étanchéité (13) comprend un matériau support et/ou un adhésif.

12. Procédé selon l'une quelconque des revendications précédentes, **caractérisé en ce que** la polymérisation du moule de coulée (1) comprend une polymérisation thermique et/ou photochimique du moule de coulée et/ou qu'au moins un paramètre de procédé est ajusté en fonction de la viscosité de la résine de coulée et/ou que la résine de coulée présente une viscosité allant jusqu'à 800 mPa·s pendant le remplissage et/ou à l'état non polymérisé et/ou comprend un ou plusieurs des éléments suivants, ou une combinaison de deux ou plusieurs d'entre eux : notamment des résines de coulée de polyuréthane et de polythiouréthane polymérisables thermiquement , des résines de coulée de polyacrylate et de polyméthacrylate de méthyle, notamment des résines de coulée de polyacrylate et de polyméthacrylate de méthyle polymérisables thermiquement et/ou photochimiquement, des résines de coulée de polycarbonate et de polydiéthylène glycol bis(allyl carbonate), notamment des résines de coulée de polycarbonate et de polydiéthylène glycol bis(allyl carbonate) thermodurcissables, des isocyanates, des isothiocyanates et/ou des épisulfures multifonctionnels, des alcools et/ou des thiols multifonctionnels, des acrylates et/ou des méthyles multi- et/ou monofonctionnels méthacrylates , carbonates d'allyle multi- et/ou monofonctionnels et/ou bis(carbonates d'allyle) de diéthylène glycol.

13. Appareil pour la mise en œuvre d'un procédé selon l'une quelconque des revendications précédentes, comprenant les dispositifs suivants :
- moyens de fournir le corps de base (10),
- moyens de fournir la coque du moule (11),
- moyens de fixation du ruban d'étanchéité (13) pour sceller la cavité (12) formée entre le corps de base (10) et la coque du moule (11) afin d'obtenir un ensemble de coulée (1),
- le dispositif de maintien pour positionner et retirer l'emballage de moulage (1),
- le réservoir de résine de coulée (24), la conduite d'alimentation (21) et la partie d'étanchéité (20) pour remplir la cavité (12) par au moins une ouverture (16, 17) avec la résine de coulée, la partie d'étanchéité (20) comprenant au moins une couche élastique adaptée pour reposer contre l'emballage de coulée (1), et
- le dispositif d'application de pression pour presser la partie d'étanchéité (20) et l'ensemble de moulage (1) l'un contre l'autre.

14. Appareil selon la revendication 13, dans lequel l'appareil comprend en outre :
- le dispositif d'ouverture (3) pour former au moins une ouverture (16, 17) dans le ruban d'étanchéité (13), et/ou
- un dispositif permettant de fermer au moins une ouverture (16, 17), et/ou
- un dispositif de durcissement pour durcir le paquet de coulée (1).
